(19) Europäisches Patentamt
European Patent Office
Office européen des brevets

(11) EP 2 735 589 B1

(12) **EUROPEAN PATENT SPECIFICATION**

(45) Date of publication and mention of the grant of the patent:
**06.06.2018 Bulletin 2018/23**

(21) Application number: **12814690.9**

(22) Date of filing: **25.06.2012**

(51) Int Cl.:
***C08L 69/00*** *(2006.01)*

(86) International application number:
**PCT/JP2012/066130**

(87) International publication number:
**WO 2013/011804 (24.01.2013 Gazette 2013/04)**

(54) **AROMATIC POLYCARBONATE RESIN COMPOSITION AND ARTICLES MOLDED THEREFROM**

AROMATISCHE POLYCARBONATHARZZUSAMMENSETZUNG UND DARAUS GEFORMTE ARTIKEL

COMPOSITION DE RÉSINE DE POLYCARBONATE AROMATIQUE ET ARTICLES MOULÉS À PARTIR CE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2011 JP 2011159213**

(43) Date of publication of application:
**28.05.2014 Bulletin 2014/22**

(73) Proprietor: **Mitsubishi Engineering-Plastics Corporation**
**Tokyo 105-0021 (JP)**

(72) Inventors:
- **KUROKAWA, Haruhiko**
  **Hiratsuka-shi**
  **Kanagawa 254-0016 (JP)**
- **NISHIBAYASHI, Yutaka**
  **Hiratsuka-shi**
  **Kanagawa 254-0016 (JP)**
- **NAGASHIMA, Hiromitsu**
  **Hiratsuka-shi**
  **Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:
**WO-A1-2009/128601** **JP-A- 2009 538 379**
**JP-A- 2010 116 467** **JP-A- 2011 132 334**
**JP-A- 2011 132 334** **JP-A- 2011 516 682**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of Invention

The present invention relates to an aromatic polycarbonate resin composition. In more particular, the present invention relates to an aromatic polycarbonate resin composition which has improved mechanical properties, such as an impact resistance, by blending of an impact strength improver while maintaining transparency and which also has a good surface hardness and to a molded article formed by molding this aromatic polycarbonate resin composition.

Background of Invention

Since an aromatic polycarbonate resin is excellent in transparency, impact resistance, heat resistance, and the like, and in addition, since a molded article obtained therefrom is excellent in dimensional stability, the aromatic polycarbonate resin has been widely used as a raw material resin for manufacturing precise molded articles, such as housings of electrical/electronic devices, automobile components, and optical disc-related components. In particular, for example, as cabinets of household electrical appliances, electronic devices, and image display devices, products having a high commercial value can be formed from the aromatic polycarbonate resin using its beautiful appearance.

Heretofore, in order to improve the impact resistance of an aromatic polycarbonate resin, blending thereof with various types of gum polymers each used as an impact strength improver has been performed, and a method for manufacturing a graft copolymer which can improve the impact resistance without degrading hydrolysis resistance of the aromatic polycarbonate resin has also been proposed (for example, Patent Literature 1).

In addition, in order to provide an aromatic polycarbonate resin composition having a high surface hardness while inherent high heat resistance and transparency of an aromatic polycarbonate resin are maintained, the present inventors have proposed an aromatic polycarbonate resin composition in which a predetermined amount of a phosphorus stabilizer and a predetermined amount of a fully esterified compound formed from an aliphatic alcohol and an aliphatic carboxylic acid are blended together with respect to a resin component containing at a predetermined ratio, an aromatic polycarbonate resin (A) which has a mass average molecular weight of 15,000 to 40,000 and a (meth)acrylate copolymer (B) which has a mass average molecular weight of 5,000 to 30,000 and which is composed of an aromatic (meth)acrylate unit (b1) and a methyl (meth)acrylate unit (b2) at a mass ratio (b1/b2) of 5 to 80/20 to 95 (Patent Literature 2).
Patent Literature 3 relates to a flame- and scratch-retardant thermoplastic resin composition which comprises 20 - 95 parts by weight of a polycarbonate resin (A), 1 - 50 parts by weight of a copolymer resin (B) comprising 0 - 100 wt.-% of a rubber modified vinyl graft copolymer resin (B1) and 0 - 100 wt.-% of a vinyl copolymer resin (B2), 1 - 50 parts by weight of a (meth)acrylic copolymer resin (C) with a refractive index of 1.50 - 1.59 and 0.1 - 40 parts by weight of a flame retardant, per 100 parts by weight of a base resin comprising (A) + (B) + (C).
Patent Literature 4 describes a transparent thermoplastic resin composition comprising 50 - 99.5 wt.-% of a thermoplastic resin (A) having a light transmission rate of > 85 %, 0.5 to 50 wt.-% of at least one selected from the group consisting of an organic polymer (B) and an inorganic filler (C), and a dye (D) in an amount of $1 \times 10^{-7}$ -$1 \times 10^{-4}$ parts by weight based on 100 parts by weight of components (A), (B) and (C). The difference in the refractive indices between the thermoplastic resin (A) and both of the organic polymer (B) and the inorganic filler (C) is 0.01 or less. The thermoplastic resin (A) is preferably a PMMA resin.

List of Literature

Patent Literature

Patent Literature 1: Japanese Patent Publication 2008-255240A
Patent Literature 2: Japanese Patent Application No. 2010-162559
Patent Literature 3: WO 2009/128601 A1
Patent Literature 4: JP 2011 132334 A

Object and Summary of Invention

Although the impact resistance of an aromatic polycarbonate resin can be improved when various types of gum polymers are each blended therewith as an impact strength improver, in an aromatic polycarbonate resin composition blended with an impact strength improver, the problem in that the inherent excellent transparency of the aromatic polycarbonate resin is remarkably degraded may arise.

In the aromatic polycarbonate resin composition disclosed in Patent Literature 2, by blending a specific (meth)acrylate copolymer therewith, the surface hardness can be improved without degrading the transparency of the aromatic polycarbonate resin; however, in Patent Literature 2, the transparency obtained by blending of an impact strength improver has not been investigated.

The present invention relates to an aromatic polycarbonate resin composition which has an improved impact resistance by blending of an impact strength improver, and an object of the present invention is to provide an aromatic polycarbonate resin composition having an excellent transparency and a good surface hardness and an aromatic polycarbonate-resin molded article obtained by molding this aromatic polycarbonate resin composition.

In order to overcome problems as above, through intensive research carried by the present inventors, the following were found. That is, the findings are that the degradation in transparency by blending of an impact strength improver is caused by a large difference in refractive index between a resin matrix and the impact strength improver and that when an aromatic polycarbonate resin and a (meth)acrylate copolymer are used as the resin matrix at a specific ratio, and as the impact strength improver, when a material having a small difference in refractive index from that of the resin matrix is used, the degradation in transparency caused by the difference in refractive index between the resin matrix and the impact strength improver can be prevented, and in addition, the surface hardness can also be increased by blending of the (meth)acrylate copolymer.

The present invention was made based on the findings described above, and the summary of the present invention is described below.

[1] An aromatic polycarbonate resin composition comprises, with respect to 100 parts by mass of a resin component including 55 to 85 percent by mass of an aromatic polycarbonate resin (A) having a mass average molecular weight of 15,000 to 40,000 and 15 to 45 percent by mass of a (meth)acrylate copolymer (B) which has a mass average molecular weight of 5,000 to 30,000 and which is composed of an aromatic (meth)acrylate unit (b1) and a methyl (meth)acrylate unit (b2) at a mass ratio (b1/b2) of 5 to 50/50 to 95, 1 to 20 parts by mass of an impact strength improver (C), wherein the impact strength improver (C) includes at least one selected from the group consisting of an MBS resin, an SBS resin, and an SEBS resin, and
when the refractive index of the resin component at a wavelength of 589 nm is represented by nab, and the refractive index of the impact strength improver (C) at a wavelength of 589 nm is represented by nc, nab and nc satisfy the following formula i).

$$\text{Formula i)} \quad -0.01 \leq nab - nc \leq +0.01$$

[2] In the aromatic polycarbonate resin composition described in the above [1], wherein the (meth)acrylate copolymer (B) comprises 10 to 30 parts by mass of the aromatic (meth)acrylate unit (b1) and 70 to 90 parts by mass of the methyl (meth)acrylate unit (b2) with respect to 100 parts by mass of (b1) and (b2) in total.
[3] In the aromatic polycarbonate resin composition described in the above [1] or [2], the impact strength improver (C) is formed from a monomer having a molecular structure containing no hydroxy group.
[4] In the aromatic polycarbonate resin composition described in one of the above [1] to [3], the impact strength improver (C) contains 50 percent by mass or more of a styrene structure.
[5] In the aromatic polycarbonate resin composition described in the above [4], the impact strength improver (C) contains 60 to 80 percent by mass of a styrene structure.
[6] The aromatic polycarbonate resin composition described in one of the above [1] to [5] further comprises 1 to 100 parts by mass of an E-glass reinforcing material as a (D) component with respect to 100 parts by mass of the resin component.
[7] In the aromatic polycarbonate resin composition described in one of the above [1] to [6], the haze of a plate test piece having a thickness of 2 mm formed from the resin composition, which is measured in accordance with JIS K-7105, is 30% or less.
[8] An aromatic polycarbonate-resin molded article is obtained by molding the aromatic polycarbonate resin composition described in one of the above [1] to [7]. Advantageous Effects of Invention

According to an aromatic polycarbonate resin composition of the present invention, the impact resistance thereof can be improved when an impact strength improver is blended. Furthermore, when an aromatic polycarbonate resin and a specific (meth)acrylate copolymer are used at a specific ratio as a resin component, and a material having a small difference in refractive index from that of this resin component is used as the impact strength improver, the degradation in transparency caused by the difference in refractive index between a resin matrix and the impact strength

improver can be prevented, and the transparency can be maintained high, and in addition, the surface hardness can also be improved by blending of the (meth)acrylate copolymer. Hence, according to the present invention, an aromatic polycarbonate resin composition which is excellent in mechanical properties, such as an impact resistance, and also which has an excellent transparency, a high surface hardness, and an excellent scratch resistance and a molded article formed from the aromatic polycarbonate resin composition can be provided.

Description of Embodiments

Hereinafter, the present invention will be described in detail with reference to embodiments, example products, and the like. The present invention is not limited to the following embodiments, example products, and the like and may be arbitrarily changed and carried out without departing from the scope of the present invention.

[Outline]

An aromatic polycarbonate resin composition of the present invention at least includes at a specific ratio, an aromatic polycarbonate resin (A), a specific (meth)acrylate copolymer (B), and an impact strength improver (C) having a specific refractive index. In addition, the aromatic polycarbonate resin composition of the present invention may further include other components, if necessary.

According to the present invention, by blending of the impact strength improver (C), the impact resistance can be improved. In addition, when the aromatic polycarbonate resin (A) and the specific (meth)acrylate copolymer (B) are blended with each other at a specific ratio, and a material having a small difference in refractive index from that of the above resin component is used as the impact strength improver (C), a preferable transparency can be obtained while the problem of degradation in transparency caused by blending of the impact strength improver (C) is avoided. Furthermore, without degrading the impact resistance and the heat resistance of the aromatic polycarbonate resin (A) caused by blending of the (meth)acrylate copolymer (B), the surface hardness, that is, the scratch resistance, can be improved.

In addition, although the "preferable transparency" indicates that the haze of a molded article (plate test piece) having a thickness of 2 mm, which is measured by a method disclosed in the example described later, is 30% or less, depending on the application, this haze is more preferably 20% or less and most preferably 10% or less.

[Aromatic Polycarbonate Resin (A)]

The aromatic polycarbonate resin (A) (hereinafter referred to as "(A) component" in some cases) used in the present invention is a straight or a branched thermoplastic polymer or copolymer obtained by a reaction between an aromatic dihydroxy compound with or without a small amount of a polyhydroxy compound and phosgene or diester carbonate. A method for manufacturing an aromatic polycarbonate resin is not particularly limited, and a known phosgene method (interface polymerization method) or a known fusion method (ester exchange method) may be employed. In addition, when a fusion method is used, an aromatic polycarbonate resin in which the amount of terminal OH groups is adjusted may be used.

As the aromatic dihydroxy compound used as a raw material, for example, there may be mentioned 2,2-bis(4-hydroxyphenyl)propane (=bisphenol A), tetramethylbisphenol A, bis(4-hydroxyphenyl)-p-diisopropylbenzene, hydroquinone, resorcinol, and 4,4- dihydroxydiphenyl, and bisphenol A may be preferably mentioned. In addition, a compound in which at least one tetraalkyl phosphonium sulfonate is bonded to the above aromatic dihydroxy compound may also be used.

In order to obtain a branched aromatic polycarbonate resin, the above aromatic dihydroxy compound may be partially replaced with the following branching agent, that is, a polyhydroxy compound, such as phloroglucin, 4,6-dimethyl-2,4,6-tri(4-hydroxyphenyl)heptene-2,4,6-dimethyl-2,4,6-tri(4-hydroxyphenyl)heptane, 2,6-dimethyl-2,4,6-tri(4-hydroxyphenylheptene-3, 1,3,5-tri(4-hydroxyphenyl)benzene, or 1,1,1-tri(4-hydroxyphenyl)ethane, or a compound, such as 3,3-bis(4-hydroxyaryl)oxyindole (isatin bisphenol), 5-chloro isatin, 5,7-dichloro isatin, or 5-bromo isatin. The amount of the replacing compound as described above is generally 0.01 to 10 percent by mole with respect to the aromatic dihydroxy compound and is preferably 0.1 to 2 percent by mole.

As the aromatic polycarbonate resin (A), among those mentioned above, a polycarbonate resin derived from 2,2-bis(4-hydroxyphenyl)propane or a polycarbonate copolymer derived from 2,2-bis(4-hydroxyphenyl)propane and another aromatic dihydroxy compound is preferable. In addition, a copolymer primarily formed of a polycarbonate resin, such as a copolymer with a polymer or an oligomer having a siloxane structure, may also be used.

The aromatic polycarbonate resins mentioned above may be used alone, or at least two types thereof may be used by mixing therebetween.

In order to adjust the molecular weight of the aromatic polycarbonate resin, a monovalent aromatic hydroxy compound may be used, and as this monovalent aromatic hydroxy compound, for example, m- or p-methylphenol, m-

or p-propylphenol, p-tert-butylphenol, and a p-long chain alkylated phenol may be mentioned.

The molecular weight of the aromatic polycarbonate resin (A) used in the present invention may be arbitrarily changed in accordance with the application and may be appropriately selected and determined; however, in consideration of the moldability, the strength, and the like, the molecular weight of the aromatic polycarbonate resin (A) in terms of the mass average molecular weight [Mw] measured by a gel permeation chromatography based on polycarbonate (PC) conversion is 15,000 to 40,000 and preferably 15,000 to 30,000. When the mass average molecular weight of the aromatic polycarbonate resin is set to 15,000 or more as described above, the mechanical strength tends to more increase, and hence this aromatic polycarbonate resin is preferably used for application in which a high mechanical strength is required. On the other hand, when the mass average molecular weight of the aromatic polycarbonate resin is set to 40,000 or less, the fluidity is more suppressed from decreasing and tends to be improved, and it is more preferable in view of molding processing easiness.

In particular, the mass average molecular weight of the aromatic polycarbonate resin (A) is preferably 17,000 to 30,000 and more preferably 19,000 to 27,000. In addition, at least two types of aromatic polycarbonate resins having different mass average molecular weights may be mixed together, and in this case, at least one aromatic polycarbonate resin having a mass average molecular weight outside of the above preferable range may be used to form a mixture. In this case, the mass average molecular weight of the mixture thus obtained is preferably controlled in the above range.

[(Meth)acrylate Copolymer (B)]

The (meth)acrylate copolymer (B) (hereinafter referred to as "(B) component" in some cases) used in the present invention includes an aromatic (meth)acrylate unit (b1) and a methyl (meth)acrylate unit (b2).

In addition, in the present invention, the "(meth)acrylate" indicates one of an "acrylate" and a "methacrylate" or two thereof. In addition, the "unit" indicates a structural portion derived from a raw material monomer used when monomers are co-polymerized to form a (meth)acrylate copolymer.

The aromatic (meth)acrylate which is a monomer forming the aromatic (meth)acrylate unit (b1) indicates a (meth)acrylate in which the ester portion has an aromatic group. As the aromatic (meth)acrylate, for example, phenyl (meth)acrylate or benzyl (meth)acrylate may be mentioned. Those mentioned above may be used alone, or at least two types thereof may be used in combination. Among those mentioned above, phenyl methacrylate and benzyl methacrylate are preferable, and phenyl methacrylate is more preferable. Since the (meth)acrylate copolymer (B) includes the aromatic (meth)acrylate unit (b1), the transparency of a resin composition obtained by mixing with the aromatic polycarbonate resin (A) can be improved.

A monomer forming the methyl (meth)acrylate unit (b2) is methyl methacrylate. The methyl (meth)acrylate unit (b2) has an effect of preferably dispersing the aromatic polycarbonate resin (A) and the (meth)acrylate copolymer (B) and is able to improve the surface hardness of a molded article.

The (meth)acrylate copolymer (B) of the present invention is a copolymer including the aromatic (meth)acrylate unit (b1) and the methyl (meth)acrylate unit (b2) at a mass ratio (b1/b2) of 5 to 50/50 to 95, that is, a copolymer including 5 to 50 percent by mass of the aromatic (meth)acrylate unit (b1) and 50 to 95 percent by mass of the methyl (meth)acrylate unit (b2) (however, the total of (b1) and (b2) is 100 percent by mass). When the content of the aromatic (meth)acrylate unit (b1) in the (meth)acrylate copolymer (B) is 5 percent by mass or more, and the content of the methyl (meth)acrylate unit (b2) therein is 95 percent by mass or less, the transparency can be maintained in a region in which the addition amount of the (meth)acrylate copolymer (B) is large, and when the content of the aromatic (meth)acrylate unit (b1) is 50 percent by mass or less, and the content of the methyl (meth)acrylate unit (b2) is 50 percent by mass or more, since the compatibility with the aromatic polycarbonate resin (A) is not excessively high, and the migration characteristics onto the surface of the molded article is not degraded, the surface hardness is not decreased.

In addition, in the region in which the addition amount of the (meth)acrylate copolymer (B) is large, since a high surface hardness is obtained while a higher transparency is maintained, the (meth)acrylate copolymer (B) preferably includes 10 to 30 percent by mass of the aromatic (meth)acrylate unit (b1) and 70 to 90 percent by mass of the methyl (meth)acrylate unit (b2) (however, the total of (b1) and (b2) is 100 percent by mass).

When the content of the aromatic (meth)acrylate unit (b1) in the (meth)acrylate copolymer (B) is 10 percent by mass or more, and the content of the methyl (meth)acrylate unit (b2) therein is 90 percent by mass or less, since the compatibility with the aromatic polycarbonate resin (A) is not excessively high, and the migration characteristics onto the surface of the molded article is not degraded, the surface hardness is not decreased, and when the content of the aromatic (meth)acrylate unit (b1) is 30 percent by mass or less, and the content of the methyl (meth)acrylate unit (b2) is 70 percent by mass or more, the transparency can be maintained in a region in which the addition amount of the (meth)acrylate copolymer (B) is large.

In addition, the mass average molecular weight of the (meth)acrylate copolymer (B) is 5,000 to 30,000, preferably 10,000 to 25,000, and particularly preferably 13,000 to 20,000. When the mass average molecular weight of the (meth)acrylate copolymer (B) is 5,000 to 30,000, the compatibility with the aromatic polycarbonate resin (A) is good, and the effect

of improving a surface hardness is excellent.

In addition, the mass average molecular weight (Mw), the number average molecular weight (Mn), and the molecular weight distribution (Mw/Mn) of the (meth)acrylate copolymer (B) can be measured by a gel permeation chromatography using chloroform or tetrahydrofuran (THF) as a solvent. In this case, the molecular weight is a value based on polystyrene (PS) conversion.

As a method for polymerizing monomers to obtain the (meth)acrylate copolymer (B) used in the present invention, known methods, such as an emulsion polymerization method, a suspension polymerization method, a solution polymerization method, and a bulk polymerization method, may be used. A suspension polymerization method and a bulk polymerization method are preferable, and a suspension polymerization method is more preferable. In addition, additives and the like necessary for polymerization may also be appropriately added if required, and as the additives, for example, a polymerization initiator, an emulsifier, a dispersant, and a chain transfer agent may be mentioned.

[Resin Component]

The aromatic polycarbonate resin composition of the present invention contains as a resin component, 55 to 85 percent by mass of the aromatic polycarbonate resin (A) and 15 to 45 percent by mass of the (meth)acrylate copolymer (B) (however, the total of the aromatic polycarbonate resin (A) and the (meth)acrylate copolymer (B) is 100 percent by mass).

The mass ratio of the (meth)acrylate copolymer (B) to the aromatic polycarbonate resin (A) is more preferably 15 to 40 percent by mass of the (B) component to 60 to 85 percent by mass of the (A) component and is particularly preferably 20 to 35 percent by mass of the (B) component to 65 to 80 percent by mass of the (A) component.

When the mass ratio between the aromatic polycarbonate resin (A) and the (meth)acrylate copolymer (B) is in the range described above, by blending the (meth)acrylate copolymer (B) with the aromatic polycarbonate resin (A), the effects can be reliably obtained, that is, the balance between physical properties is retained while the transparency is maintained, and the surface hardness is also improved. In addition, after the refractive index of the resin component is approximated to that of various types of components preferable as the impact strength improver (C) and is further approximated to that of the E-glass reinforcing material (D) if required, when the resin component is blended with the impact strength improver (C) and further with the E-glass reinforcing material (D), a high transparency can be obtained.

In addition, as long as the object of the present invention is not impaired, as the resin component, the aromatic polycarbonate resin composition of the present invention may contain another resin component other than the aromatic polycarbonate resin (A) and the (meth)acrylate copolymer (B). As another transparent resin component to be blended, for example, there may be mentioned a polystyrene resin, a high-impact polystyrene resin, a hydrogenated polystyrene resin, a poly(acrylic styrene) resin, an ABS resin, an AS resin, an AES resin, an ASA resin, an SMA resin, a poly(alkyl methacrylate) resin, a poly(methacrylic methacrylate) resin, a poly(phenyl ether) resin, a polycarbonate resin other than the (A) component, an amorphous poly(alkylene terephthalate) resin, a polyester resin, an amorphous polyamide resin, a poly(4-methylpentene-1), a cyclic polyolefin resin, an amorphous polyarylate resin, a poly(ether sulfone), or a thermoplastic elastomer, such as an olefinic thermoplastic elastomer, a polyamide-based thermoplastic elastomer, a polyester-based thermoplastic elastomer, or a polyurethane-based thermoplastic elastomer, and preferably, for example, there may be mentioned a polystyrene resin, an ABS resin, an AS resin, an AES resin, an ASA resin, a poly(phenylene ether) resin, a poly(methacrylic methacrylate) resin, or a polyester resin.

Although those mentioned above may be used alone, or at least two types thereof may be used by mixing therebetween, in order to obtain the effect of the present invention by using the aromatic polycarbonate resin (A) and the (meth)acrylate copolymer (B) at a specific ratio, in particular, in order to form a resin matrix having a refractive index similar not only to that of the impact strength improver (C) but also to that of the E-glass reinforcing material (D), the amount of the another transparent resin component mentioned above is preferably set to 20 parts by mass or less with respect to 100 parts by mass of the total of the aromatic polycarbonate resin (A) and the (meth)acrylate copolymer (B).

[Impact Resistance Improver (C)]

The aromatic polycarbonate resin composition of the present invention characteristically contains 1 to 20 parts by mass of the impact strength improver (C) with respect to 100 parts by mass of the resin component of the aromatic polycarbonate resin (A) and the (meth)acrylate copolymer (B), and by blending of a specific amount of the impact strength improver (C), the impact resistance of the aromatic polycarbonate resin composition is improved.

The impact strength improver (C) includes at least one selected from the group consisting of an MBS resin, an SBS resin, and an SEBS resin. As the impact strength improver (C) used in the present invention, any material known in the past may be arbitrarily selected and used as long as the material is a rubber polymer having a glass transition temperature of 0°C or less and particularly -20°C or less or a copolymer formed by copolymerization of the rubber polymer and a monome component copolymerizable therewith, is generally blended with an aromatic polycarbonate

resin composition to improve the impact resistance thereof, and has a refractive index that satisfies the formula i) described later.

However, when the impact strength improver (C) has a hydroxy group, since the aromatic polycarbonate resin (A) is hydrolyzed so that the molecular weight thereof is decreased, and the physical properties of an obtained aromatic polycarbonate resin composition are degraded, the impact strength improver (C) is preferably formed from a monomer having no hydroxy group in its molecular structure.

As the impact strength improver, for example, there may be mentioned a polybutadiene, a polyisoprene, a diene-based copolymer (a styrene-butadiene copolymer, an acrylonitrile-butadiene copolymer, an acrylic-butadiene rubber, or the like), a copolymer between ethylene and an α-olefin(an ethylene-propylene copolymer, an ethylene-butene copolymer, an ethylene-octene copolymer, or the like), a copolymer between ethylene and an unsaturated carboxylic acid ester (an ethylene-methacrylate copolymer, an ethylene-butyl acrylate copolymer, or the like) a copolymer between ethylene and an aliphatic vinyl compound, a terpolymer among ethylene, propylene, and a non-conjugated diene, an acrylic rubber (a poly(butyl acrylate), a poly(2-ethylhexyl acrylate), a butyl acrylate-2-ethylhexyl acrylate copolymer, or the like), a silicone rubber (a polyorganosiloxane rubber, an IPN type composite rubber formed between a polyorganosiloxane rubber and a poly(alkyl (meta)acrylate) rubber, or the like). Those mentioned above may be used alone, or at least two types thereof may be used in combination. In addition, the "(meth)acrylate" indicates an "acrylate" and a "methacrylate", and the "(meth)acrylic acid" described later indicates "acrylic acid" and "methacrylic acid".

As the monomer component which is copolymerized, if necessary, with the aforementioned impact strength improver, for example, an aromatic vinyl compound, a vinyl cyanide compound, a (meth)acrylate ester compound, and a (meth)acrylic acid compound may be preferably mentioned. As other monomer components, for example, there may be mentioned an epoxy group-containing (meth)acrylate ester compound, such as glycidyl (meth)acrylate; a maleimide compound, such as maleimide, N-methyl maleimide, or N-phenyl maleimide; an α, β-unsaturated carboxylic acid compound, such as maleic acid, phthalic acid, or itaconic acid: and an anhydride of the α, β-unsaturated carboxylic acid compound, such as maleic acid anhydride. Those monomer components may also be used alone, or at least two types thereof may be used in combination.

In order to improve the impact resistance of the aromatic polycarbonate resin composition of the present invention, in particular, in view of the dispersibility in and the compatibility with the polycarbonate resin composition, a core/shell type graft copolymer-type impact strength improver is preferably used. In particular, a core/shell type graft copolymer is especially preferable in which at least one rubber polymer selected from a butadiene-containing rubber, a butyl acrylate-containing rubber, a 2-ethylhexyl acrylate-containing rubber, and a silicon rubber is used as a core layer, and a shell layer is formed around the periphery thereof by copolymerizing at least one monomer component selected from an acrylate ester, a methacrylate ester, and an aromatic vinyl compound with the periphery of the core layer. In more particular, for example, there may be mentioned a core/shell type elastomer in which the shell layer is formed of a poly(methyl methacrylate) (PMMA) polymer or copolymer block, such as a styrene butadiene polymer, a methyl methacrylate-butadiene-styrene polymer (MBS), a methyl methacrylate-acrylonitrile-butadiene-styrene polymer (MABS), a methyl methacrylate-butadiene polymer (MB), a methyl methacrylate-acrylate rubber polymer (MA), a methyl methacrylate-acrylic/butadiene rubber copolymer, a methyl methacrylate-acrylic/butadiene rubber-styrene copolymer, or a methyl methacrylate-(acrylic/silicone IPN (interpenetrating polymer network) rubber) polymer.

The volume average particle diameter of the core/shell type elastomer is preferably 0.15 μm to 0.35 μm. When the volume average particle diameter is less than 0.15 μm, the effect of improving an impact resistance cannot be obtained, and on the other hand, when the volume average particle diameter is more than 0.35 μm, the transparency is degraded.

As other particular examples of the rubber polymer formed by copolymerization between a rubber polymer and a monomer component copolymerizable therewith, for example, there may be mentioned a polybutadiene rubber, a styrene-butadiene copolymer (SBR), a styrene-butadiene-styrene block copolymer (SBS), a styrene-ethylene/butylene-styrene block copolymer (SEBS), a styrene-ethylene/propylene-styrene block copolymer (SEPS), an ethylene-ethyl acrylate copolymer (EEA), and an ethylene-methyl acrylate copolymer (EMA).

In the present invention, among the impact strength improvers as described above, when the refractive index of the resin component formed from the aromatic polycarbonate resin (A) and the (meth)acrylate copolymer (B) at a wavelength of 589 nm is represented by nab, and the refractive index of the impact strength improver (C) at a wavelength of 589 nm is represented by nc, an impact strength improver (C) which satisfies the following formula i) is used.

$$\text{Formula i)} \quad -0.01 \leq nab - nc \leq +0.01$$

When nab-nc is less than -0.01 or more than 0.01, the difference in refractive index between the resin matrix and the impact strength improver (C) is large, and as a result, an aromatic polycarbonate resin composition having an

excellent transparency cannot be obtained. It is more preferable when nab-nc is closer to 0, that is, $-0.008 \leq$ nab - nc $\leq 0.008$ is preferable, and $-0.005 \leq$ nab - nc $\leq 0.005$ is more preferable.

The refractive index of the aromatic polycarbonate resin (A) is generally approximately 1.58, the refractive index of the (meth)acrylate copolymer (B) is generally approximately 1.51, and although being changed depending on the mixing ratio therebetween, the refractive index of the resin component formed by mixing between the aromatic polycarbonate resin (A) and the (meth)acrylate copolymer (B) in the range specified in the present invention is generally approximately 1.54 to 1.57; hence, the refractive index of the impact strength improver (C) is preferably in a range of 1.53 to 1.58 and particularly preferably in a range of 1.56 to 1.57.

Among the impact strength improvers described above, as the impact strength improver (C), an MBS resin, an SBS resin, or an SEBS resin, each of which has excellent compatibility with the aromatic polycarbonate resin composition of the present invention, is preferable since the refractive index thereof can be easily adjusted and can be easily made equivalent to that of the resin component used in the present invention, and in those resins described above, when the composition ratio between monomer components forming the resin is adjusted, the refractive index thereof can be easily controlled.

Among the monomer components forming those resins, since the refractive index of styrene is approximately 1.595, the refractive index of butadiene is approximately 1.515, and the refractive index of (meth)acrylate compound is approximately 1.494, when the impact strength improver (C) used in the present invention contains 50 percent by mass or more of a styrene structure and in particular, approximately 60 to 80 percent by mass thereof, the refractive index can be made approximated to that of the resin component, and hence it is preferable. When the impact strength improver (C) contains more than 80 percent by mass of the styrene structure, since the impact resistance is remarkably degraded, the content of the styrene structure of the impact strength improver (C) is preferably 80 percent by mass or less.

In addition, when the impact strength improver (C) is manufactured from an MBS resin, an SBS resin, an SEBS resin, or the like by adjusting the composition ratio between the monomer components forming the resin of the impact strength improver (C), although the manufacturing may be performed in accordance with a common method, for example, a method disclosed in Japanese Unexamined Patent Application Publication No. 2008-255240 may also be used.

Those impact strength improvers (C) may be used alone, or at least two types thereof may be used in combination.

In the present invention, with respect to 100 parts by mass of the total of the aromatic polycarbonate resin (A) and the (meth)acrylate copolymer (B), the blend amount of the impact strength improver (C) is in a range of 1 to 20 parts by mass and is appropriately adjusted in accordance with properties required for the application of the aromatic polycarbonate resin composition and/or the type of impact strength improver (C) to be used. When the blend amount of the impact strength improver (C) is smaller than the above lower limit, the effect of improving an impact resistance obtained by blending of the impact strength improver (C) cannot be sufficiently obtained, and when the blend amount described above is more than the above upper limit, the surface hardness tends to decrease. The blend amount of the impact strength improver (C) with respect to 100 parts by mass of the total of the aromatic polycarbonate resin (A) and the (meth)acrylate copolymer (B) is preferably 2 to 15 parts by mass, more preferably 3 to 10 parts by mass, and particularly preferably 4 to 8 parts by mass.

[(D) Component]

The aromatic polycarbonate resin composition of the present invention may contain as a (D) component, an E-glass reinforcing material (hereinafter referred to as "E-glass reinforcing material (D)" in some cases), and by blending of the E-glass reinforcing material (D), the elastic modulus, the flexural strength, the impact resistance, and the mechanical properties can be further improved. The E-glass reinforcing material (D) is a glass reinforcing material formed from E glass, and since the E-glass reinforcing material is formed from E glass, the difference of the refractive index thereof from that of the resin matrix formed of the aromatic polycarbonate resin (A) and the (meth)acrylate copolymer (B) can be significantly decreased, and degradation in transparency caused by blending of the E-glass reinforcing material (D) can be prevented, so that a resin composition having an excellent transparency can be obtained.

In addition, the E glass is a non-alkaline glass having the following component composition, and the refractive index thereof is approximately 1.545 to 1.562.

<E Glass Composition: Percent by Mass>

$SiO_2$: 52 to 56
$Al_2O_3$: 12 to 16
$Fe_2O_3$: 0 to 0.4

CaO: 16 to 25
MgO: 0 to 6
$B_2O_3$: 5 to 13
$TiO_2$: 0 to 0.5
$R_{2O}$ ($Na_2O$+$K_2O$) : 0 to 0.8

In addition, as described above, since the refractive index of the aromatic polycarbonate resin (A) is generally approximately 1.58, and the refractive index of the (meth)acrylate copolymer (B) is generally approximately 1.51, although being changed depending on the mixing ratio between the aromatic polycarbonate resin (A) and the (meth)acrylate copolymer (B), the refractive index of the resin matrix obtained by mixing the above two components in the range specified by the present invention is generally approximately 1.54 to 1.57 and can be adjusted to be approximately equivalent to that of the E glass.

In addition, in order to obtain an aromatic polycarbonate resin composition excellent in transparency, the difference in refractive index between the E-glass reinforcing material (D) and the resin matrix (this resin matrix contains the aromatic polycarbonate resin (A), the (meth)acrylate copolymer (B), and the another transparent resin to be blended if necessary) of the aromatic polycarbonate resin composition of the present invention is preferably 0.02 or less and particularly preferably 0.01 or less.

The shape of the E-glass reinforcing material (D) used in the present invention is not particularly limited, and any of grains (that is, granular glass), fibers (that is, glass fibers, and the glass fibers include "milled fibers".), and flakes (that is, glass flakes) may be used; however, since a resin composition having excellent effects of improving an elastic modulus, a flexural strength, an impact resistance, and the like and also having an excellent transparency can be obtained, glass fibers (including milled fibers) or glass flakes are used.

Although the shape of the granular glass may be any one of a sphere, a die, and the like, a granular glass (glass bead) having a high sphericity (ratio between the maximum diameter and the minimum diameter) of close to 1 is preferable, and the average grain diameter thereof is preferably 1 to 100 μm. When a granular E-glass reinforcing material (D) has an average grain diameter of less than 1 μm, since the handling property thereof is inferior, that is, for example, since the grains are scattered during blending, the glass is difficult to be uniformly dispersed in the composition. On the other hand, when a glass having an average grain diameter of more than 100 μm, the appearance of an obtained molded article is liable to be degraded, and the reinforcing effect also may become insufficient in some cases.

This granular glass may be a granular glass processed by a surface treatment with a surface treatment agent, such as an (E) component which will be described later. By the surface treatment as described above, the adhesion between the resin component and the granular glass is improved, and as a result, a high transparency and a high mechanical strength can be achieved.

As the glass fiber, continuously wound "glass rovings", "chopped strands" formed by cutting thereof into a length of 1 to 10 mm, or "milled fibers" formed by crushing of the glass roving into a length of approximately 10 to 500 μm may be used, or those mentioned above may be used in combination.

The glass fiber chopped stands are formed by cutting glass fibers (strands) composed of several tens to several thousands of glass monofilaments (filament), which are bundled together, into a predetermined length, and the cross-sectional shape obtained by cutting the glass fiber in a direction perpendicular to the length direction thereof is generally a perfect circular or a polygonal shape.

As the glass fiber chopped strands, strands each having an approximately columnar shape, such as a cylindrical shape or a rectangular columnar shape, an average fiver diameter of 1 to 25 μm and particularly 8 to 15 μm, and an average fiber length in a major axis direction of 1 to 10 mm and particularly 2 to 5 mm are preferably used.

When chopped strands have an average fiber diameter of less than 1 μm, the bulk density thereof is low, uniform dispersibility of glass fibers is degraded, and the molding processability tends to be degraded. In addition, when the average fiber diameter is more than 25 μm, the appearance of a molded article is degraded, and the reinforcing effect tends to become insufficient. In addition, chopped strands having an excessively short average fiber length are not preferable since the reinforcing effect thereof is insufficient, and chopped strands having an excessively long average fiber length are not preferable since the workability in kneading and the molding processability are degraded.

The glass fiber chopped strands of the present invention may be processed by a surface treatment with a surface treatment agent, such as the (E) component which will be described later, and by the surface treatment described above, monofilaments are bundled together, and the lubricity is imparted to the surfaces thereof; hence, the surfaces of the filaments are prevented from being damaged. In addition, the adhesion between the glass fibers and the resin component is improved, and as a result, a high transparency and a high mechanical strength can be achieved.

The glass fiber milled fibers are obtained by crushing the above glass fibers (strands) and have an approximately columnar shape, such as a cylindrical shape or a rectangular columnar shape, an average fiber diameter of 1 to 25 μm and preferably 5 to 15 μm, and an average fiber length of 1 to 500 μm, preferably 10 to 300 μm, and more preferably 20 to 200 μm.

When short milled fibers having an average fiber diameter of less than 1 μm are used, the molding processability is degraded, and when the average fiber diameter thereof is more than 25 μm, the appearance of a molded article is degraded, and the reinforcing effect tends to be insufficient.

As in the case described above, when the milled fibers described above are processed by a surface treatment with a surface treatment agent, such as the (E) component which will be described later, the adhesion to the resin component can be improved, and as a result, the transparency and the mechanical properties of the resin composition can be further improved.

The glass flakes are a glass powder in the form of scales generally having an average grain diameter of 10 to 4,000 μm, an average thickness of several micrometers, and an aspect ratio (ratio of average maximum diameter/average thickness) of approximately 2 to 200. As the glass flakes used in the present invention, glass flakes having an average grain diameter of 2,000 μm or less and particularly 500 to 1,500 μm, an average thickness of 1 to 10 μm and particularly 2 to 6 μm, and an aspect ratio of 10 to 180 and particularly 50 to 150 are preferable.

When the average grain diameter of glass flakes is more than 2,000 μm, since classification occurs in blending of individual components of the resin composition, uniform dispersion with the resin component is difficult to obtain, and unevenness tends to be generated on a molded article. However, when the average grain diameter is excessively small, the reinforcing effect is not sufficient. In addition, when the average thickness is excessively small, the glass flakes are liable to be fractured in kneading due to insufficient strength, and when the average thickness is excessively large, since the reinforcing effect may become insufficient and/or the molding processability may be degraded, it is not preferable.

As in the case of the glass fibers described above, in order to improve the adhesion to the resin component, as the glass flakes described above, glass flakes processed by a surface treatment with a surface treatment agent, such as the (E) component which will be described later, may be used.

In addition, in the present invention, the grain diameter of the granular glass and that of the glass flakes each indicate a length corresponding to the maximum distance between two palates which is obtained when the granular glass or the glass flakes are sandwiched therebetween. In addition, in order to obtain the average fiber diameter, average fiber length, average grain diameter, and average thickness of the glass reinforcing material, after grains or fibers of the glass reinforcing material are spread on a glass so as not to be overlapped with each other as much as possible, are observed by an optical microscope at a magnification of 40 to 100 times, and are photographed, the maximum diameters, the lengths, and the like of 1,000 grains or fibers of the glass reinforcing material which are arbitrarily selected are measured using a slide gauge, and the arithmetic means thereof are calculated. As the values described above, as for commercially available products, catalog values thereof may be used.

In the present invention, as the E-glass reinforcing material (D), one type may be used alone, or at least two types may be used in combination. For example, at least two types of granular glass having different average grain diameters and different shapes may be used in combination, at least two types of glass fibers (including milled fibers) having different average fiber diameters and different average lengths may be used in combination, and at least two types of glass flakes having different average grain diameters, different thicknesses, and different aspect ratios may be used in combination. In addition, at least one type of granular glass and at least one type of glass fibers (including milled fibers) may be used in combination, at least one type of granular glass and at least one type of glass flakes may be used in combination, at least one type of glass flakes and at least one type of glass fibers (including milled fibers) may be used in combination, and at least one type of granular glass, at least one type of glass fibers (including milled fibers), and at least one type of glass flakes may be used in combination.

When the aromatic polycarbonate resin composition of the present invention contains the E-glass reinforcing material (D), the blend amount thereof is set in a range of 1 to 100 parts by mass with respect to 100 parts by mass of the total of the aromatic polycarbonate resin (A) and the (meth)acrylate copolymer (B) and is preferably appropriately adjusted in accordance with properties required for the application of the aromatic polycarbonate resin composition and/or the type of E-glass reinforcing material (D) to be used. When the blend amount of the E-glass reinforcing material (D) is smaller than the lower limit described above, the effect of improving mechanical properties obtained by blending of the E-glass reinforcing material (D) cannot be sufficiently obtained, and when the blend amount is more than the upper limit described above, the moldability tends to be degraded. The blend amount of the E-glass reinforcing material (D) is, with respect to 100 parts by mass of the total of the aromatic polycarbonate resin (A) and the (meth)acrylate copolymer (B), preferably 2 to 80 parts by mass and more preferably 5 to 50 parts by mass.

[(E) Component]

In particular, when containing the E-glass reinforcing material (D), the aromatic polycarbonate resin composition of the present invention may contain, as the (E) component, an organic silane compound (E-1) represented by the following formula (1) and/or a silicon compound (E-2).

$$(R^1O)_pSiR^2_{4-p} \qquad (1)$$

(In the formula, $R^1$ and $R^2$ each represent an organic group, and p represents an integer of 1 to 4.)

As the organic group represented by $R^1$ and $R^2$, various aliphatic, aromatic, and alicyclic hydrocarbon groups may be mentioned. Those hydrocarbon groups each may include an ethylenic unsaturated bond, may also include an ether bond and/or an ester bond, and may further include at least one reactive functional group, such as an epoxy group or an amino group.

$R^1$ preferably represents an aliphatic hydrocarbon group having 1 to 4 carbon atoms, and $R^2$ preferably represents an aromatic or an alicyclic hydrocarbon group having 6 to 12 carbon atoms, an aliphatic hydrocarbon group having 1 to 12 carbon atoms, a hydrocarbon group having an ethylenic unsaturated bond and 2 to 16 carbon atoms, or a hydrocarbon group having an epoxy group and 3 to 15 carbon atoms. In particular, $R^1$ preferably represents an aliphatic hydrocarbon group having 1 to 4 carbon atoms, and $R^2$ preferably represents an aliphatic hydrocarbon group having 1 to 12 carbon atoms.

This organic silane compound (E-1) preferably includes at least one $R^1$ and at least one $R^2$, and hence, p is preferably one of 1 to 3.

As the aromatic or alicyclic hydrocarbon group having 6 to 12 carbon atoms, for example, a phenyl group or a cyclohexyl group may be mentioned; as the aliphatic hydrocarbon group having 1 to 12 carbon atoms, for example, a methyl group, an ethyl group, a propyl group, a butyl group, an isobutyl group, or a decyl group may be mentioned; as the hydrocarbon group having an ethylenic unsaturated bond and 2 to 16 carbon atoms, for example, a vinyl group, an aryl group, an isopropenyl group, or a butenyl group may be mentioned, and a group, such as a methacryloxy propyl group or an acryloxy propyl group, having an ester group may also be mentioned; and as the hydrocarbon group having an epoxy group and 3 to 15 carbon atoms, for example, 3,4-epoxy cyclohexyl group or a glycidoxy propyl group may be mentioned.

As particular examples of the organic silane compound (E-1) of the present invention, for example, there may be mentioned trimethyl silane, trimethoxy silane, methyl trimethoxy silane, octyl trimethoxy silane, decyl trimethoxy silane, dimethyl dimethoxy silane, methyl triethoxy silane, trimethyl methoxy silane, isobutyl trimethoxy silane, vinyl trimethoxy silane, vinyl triethoxy silane, vinyl tris(β-methoxyethoxy)silane, β-(3,4-epoxycyclohexyl)ethyl trimethoxy silane, γ-glycidoxypropyl trimethoxy silane, γ-glycidoxypropyl methyl diethoxy silane, γ-glycidoxypropyl triethoxy silane, γ-methacryloxypropyl methyl dimethoxy silane, γ-methacryloxypropyl trimethoxy silane, and phenyl trimethoxy silane.

Those organic silane compounds (E-1) may be used alone, or at least two types thereof may be used in combination.

As the silicone compound (E-2) used in the present invention, any one of polyorganohydrogensiloxanes and organopolysiloxanes may be used. In addition, the molecular weight thereof is also not particularly limited, and a silicone compound belonging to any one of an oligomer and a polymer may also be used. In more particular, polyorganohydrogensiloxanes represented by the formulas (a) to (c) disclosed in Japanese Examined Patent Application Publication No. 63-26140 and hydrocarbonoxysiloxanes represented by the formulas disclosed in Japanese Examined Patent Application Publication No. 63-31513 are preferable. The silicone compound used as the (E) component is preferably selected from polyorganohydrogensiloxanes. For example, a polysiloxane including a repeating unit represented by the following formula (2) and a compound represented by the following formula (3) or (4) are preferably used.

$$(R)_{\alpha}(H)_{\beta}SiO \qquad (2)$$

(In the above formula, R represents a straight or a branched alkyl group having 1 to 10 carbon atoms, and the total of α and β is 2.)

[Chem. 1]

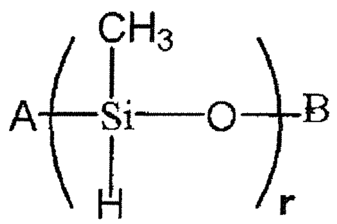

··· (3)

(In the above formula, A and B each represent a group selected from the corresponding group, and r is an integer of 1 to 500.)

[Chem. 2]

A : 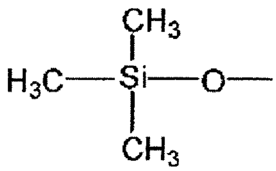 , 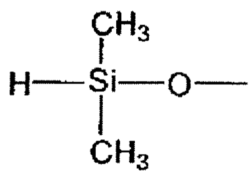

B : 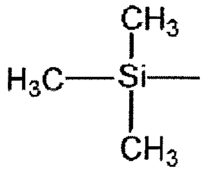 , 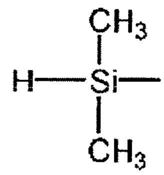

[Chem. 3]

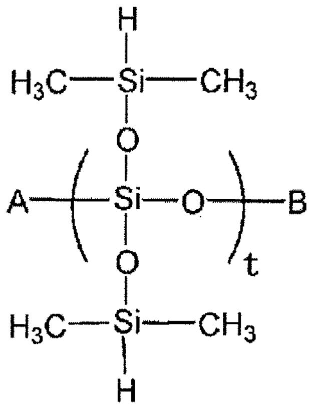 ... (4)

(In the above formula, A and B are the same as those in the above formula (3), and t is an integer of 1 to 50.)

As the silicone compound (E-2), a commercially available silicone oil, such as SH1107 (manufactured by Dow Corning Toray Silicone Co., Ltd.), may be used.

Those silicone compounds (E-2) may be used alone, or at least two types thereof may be used in combination.

In addition, in the present invention, as the (E) component, at least one type of organic silane compounds (E-1) and at least one type of silicone compounds (E-2) may be used in combination.

When the aromatic polycarbonate resin composition of the present invention contains the above (E) component together with the E-glass reinforcing material (D), the content of the (E) component is preferably 1 to 10 percent by mass with respect to the E-glass reinforcing material (D) and is particularly preferably 0.5 to 3 percent by mass.

The (E) component covers active points of the surface of the E-glass reinforcing material (D) to prevent degradation of the resin component and also functions to further improve the transparency and mechanical properties by increasing the adhesion between the E-glass reinforcing material (D) and the resin matrix; however, when the blend amount of the (E) component is excessively small, the effect described above cannot be sufficiently obtained, the transparency of an obtained resin composition is degraded, and furthermore, the heat stability, mechanical strength, hue, heat resistance, and humidity and heat resistance are also degraded. On the other hand, when the blend amount of the (E) component is excessively large, gas is generated in melt mixing, and mold deposits are liable to be generated thereby in some cases.

In addition, since the effect can be obtained by a small amount of the silicone compound (E-2) as compared to that of the organic silicone compound (E-1), when the silicone compound (E-2) is used as the (E) component, the content thereof is preferably set to 1 to 6 percent by mass with respect to the E-glass reinforcing material (D).

[Other Additives]

The aromatic polycarbonate resin composition of the present invention may further contain various additives as long as the effects of the present invention are not impaired. As the additives mentioned above, for example, a phosphorus stabilizer, a mold releasing agent, an antioxidant, an UV absorber, a dye or a pigment, an antistatic agent, a flame retardant, and an anti-dripping agent may be mentioned.

<Phosphorus Stabilizer (F)>

A phosphorus stabilizer (F) is generally effective to improve residence stability at a high temperature when the resin component is melt-mixed and heat-resistance stability when a resin molded article is used.

As the phosphorus stabilizer (F) used in the present invention, for example, phosphorous acid, phosphoric acid, a phosphite ester, and a phosphoric ester may be mentioned, and among those mentioned above, a phosphite ester, such as a phosphite or a phosphonite, containing trivalent phosphorus is preferable since an effect of suppressing discoloration can be easily obtained.

As the phosphite, for example, there may be mentioned triphenyl phosphite, tris(nonylphenyl)phosphite, dilaurylhydrogen phosphite, triethyl phosphite, tridecyl phosphite, tris(2-ethylhexyl)phosphite, tris(tridecyl)phosphite, tristearyl phosphite, diphenyl monodecyl phosphite, monophenyl didecyl phosphite, diphenyl mono(tridecyl)phosphite, tetraphenyldipropylene glycol diphosphite, tetraphenyltetra(tridecyl)pentaerythritol tetraphosphite, hydrogenated bisphenol A phenol phosphite polymer, diphenylhydrogen phosphite, 4,4'-butylidene-bis(3-methyl-6-tert-butylphenyldi(tridecyl)phosphite, tetra(tridecyl)4,4'-isopropylidenediphenyl diphosphite, bis(tridecyl)pentaerythritol diphosphite, bis(nonylphenyl)pentaerythritol diphosphite, dilaurylpentaerythritol diphosphite, distearylpentaerythritol diphosphite, tris(4-tert-butylphenyl)phosphite, tris(2,4-di-tert-butylphenyl)phosphite, hydrogenated bisphenol A pentaerythritol phosphite polymer, bis(2,4-di-tert-butylphenyl)pentaerythritol diphosphite, bis(2,6-di-tert-butyl-4-methylphenyl)pentaerythritol diphosphite, 2,2'-methylenebis(4,6-di-tert-butylphenyl)octyl phosphite, and bis(2,4-dicumylphenyl)pentaerythritol diphosphite.

In addition, as the phosphonite, for example, there may be mentioned tetrakis(2,4-di-iso-propylphenyl)-4,4'-biphenylene diphosphonite, tetrakis(2,4-di-n-butylphenyl)-4,4'-biphenylene diphosphonite, tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-iso-propylphenyl)-4,4'-biphenylene diphosphonite, tetrakis(2,6-di-n-butylphenyl)-4,4'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, and tetrakis(2,6-di-tert-butylphenyl)-3,3'-biphenylene diphosphonite.

In addition, as an acid phosphate, for example, there may be mentioned methyl acid phosphate, ethyl acid phosphate, propyl acid phosphate, isopropyl acid phosphate, butyl acid phosphate, butoxyethyl acid phosphate, octyl acid phosphate, 2-ethylhexyl acid phosphate, decyl acid phosphate, lauryl acid phosphate, stearyl acid phosphate, oleyl acid phosphate, behenyl acid phosphate, phenyl acid phosphate, nonylphenyl acid phosphate, cyclohexyl acid phosphate, phenoxyethyl acid phosphate, alkoxypolyethylene glycol acid phosphate, bisphenol A acid phosphate, dimethyl acid phosphate, diethyl acid phosphate, dipropyl acid phosphate, diisopropyl acid phosphate, dibutyl acid phosphate, dioctyl acid phosphate, di-2-ethylhexyl acid phosphate, dioctyl acid phosphate, dilauryl acid phosphate, distearyl acid phosphate, diphenyl acid phosphate, and bisnonylphenyl acid phosphate.

Among the phosphite esters, distearyl pentaerythritol diphosphite, tris(2,4-di-tert-butylphenyl)phosphite, bis(2,6-di-tert-butyl-4-methylphenyl)pentaerythritol diphosphite, 2,2'-methylenebis(4,6-di-tert-butylphenyl)octylphosphite, and bis(2,4-dicumylphenyl)pentaerythritol diphosphite are preferable, and since having a preferable heat resistance and being not likely to be hydrolyzed, tris(2,4-di-tert-butylphenyl)phosphite is particularly preferable.

Those phosphorus stabilizers (F) may be used alone, or at least two types thereof may be used in combination.

When the aromatic polycarbonate resin composition of the present invention contains the phosphorus stabilizer (F), the content thereof is, with respect to 100 parts by mass of the total of the aromatic polycarbonate resin (A) and the (meth)acrylate copolymer (B), generally 0.001 parts by mass or more, preferably 0.003 parts by mass or more, and more preferably 0.005 parts by mass or more, and is generally 0.1 parts by mass or less, preferably 0.08 parts by mass or less, and more preferably 0.06 parts by mass or less. When the content of the phosphorus stabilizer (F) is less than the lower limit of the above range, the heat stable effect may become insufficient in some cases, and when the content of the phosphorus stabilizer (F) is more than the upper limit of the above range, since the effect cannot be further improved, it may not be preferable from an economical point of view.

<Mold Releasing Agent (G)>

The aromatic polycarbonate resin composition of the present invention may contains a mold releasing agent (G), and as the mold releasing agent (G), a fully esterified compound formed between an aliphatic alcohol and an aliphatic

carboxylic acid is preferably used.

As the aliphatic carboxylic acid forming a fully esterified compound, for example, a saturated or an unsaturated aliphatic monocarboxylic acid, dicarboxylic acid, or tricarboxylic acid may be mentioned. In this case, the aliphatic carboxylic acid also includes an alicyclic carboxylic acid. Among those mentioned above, as a preferable aliphatic carboxylic acid, a monocarboxylic acid or a dicarboxylic acid, each having 6 to 36 carbon atoms, is preferable, and an aliphatic saturated monocarboxylic acid having 6 to 36 carbon atoms is more preferable. As particular examples of the aliphatic carboxylic acid as described above, for example, there may be mentioned palmitic acid, stearic acid, valeric acid, caproic acid, capric acid, lauric acid, arachin acid, behenic acid, lignoceric acid, cerotic acid, melissic acid, tetratriacontanoic acid, montanic acid, glutaric acid, adipic acid, and azelaic acid.

In addition, as the aliphatic alcohol component forming a fully esterified compound, for example, a saturated or an unsaturated monoalcohol or a saturated or an unsaturated polyalcohol may be mentioned. Those alcohols mentioned above may include a substituent, such as a fluorine atom or an aryl group. Among those alcohols mentioned above, a saturated monoalcohol or polyalcohol, each having 30 carbon atoms or less, is preferable, and an aliphatic saturated monoalcohol or polyalcohol, each having 30 carbon atoms or less, is more preferable. In this case, the aliphatic alcohol also includes an alicyclic alcohol.

As particular examples of those alcohols, for example, there may be mentioned octanol, decanol, dodecanol, stearyl alcohol, behenyl alcohol, ethylene glycol, diethylene glycol, glycerin, pentaerythritol, 2,2-dihydroxy perfluoropropanol, neopentylene glycol, ditrimethylol propane, and dipentaerythritol.

In addition, in a fully esterified compound formed between the above aliphatic alcohol and the above aliphatic carboxylic acid, the esterification rate is not always required to be 100% and may be 80% or more. The esterification rate of the fully esterified compound of the present invention is preferably 85% or more and particularly preferably 90% or more.

In particular, the fully esterified compound formed between an aliphatic alcohol and an aliphatic carboxylic acid, which is used in the present invention, preferably contains at least one fully esterified compound formed between an aliphatic monoalcohol and an aliphatic monocarboxylic acid and at least one fully esterified compound formed between an aliphatic polyalcohol and an aliphatic monocarboxylic acid, and when a fully esterified compound formed between an aliphatic monoalcohol and an aliphatic monocarboxylic acid and a fully esterified compound formed between an aliphatic polyalcohol and an aliphatic monocarboxylic acid are used in combination, the mold releasing effect is not only improved but also the generation of gas in melt mixing is suppressed, and as a result, an effect of reducing mold deposits can be obtained.

As the fully esterified compound formed between an aliphatic monoalcohol and an aliphatic monocarboxylic acid, a fully esterified compound (stearyl stearate) formed between stearyl alcohol and stearic acid and a fully esterified compound (behenyl behenate) formed between behenyl alcohol and behenic acid are preferable. In addition, as the fully esterified compound formed between an aliphatic polyalcohol and an aliphatic monocarboxylic acid, a fully esterified compound (glycerin tristearate) formed between glycerin and stearic acid and a fully esterified compound (pentaerythritol tetrastearate) formed between pentaerythritol and stearic acid are preferable, and pentaerythritol tetrastearate is particularly preferable.

In addition, the fully esterified compound formed between an aliphatic alcohol and an aliphatic carboxylic acid may contain an aliphatic carboxylic acid and/or alcohol as impurities and may be a mixture of a plurality of compounds.

When the aromatic polycarbonate resin composition of the present invention contains the mold releasing agent (G), such as a fully esterified compound formed between an aliphatic alcohol and an aliphatic carboxylic acid, the content of the mold releasing agent (G) is, with respect to 100 parts by mass of the total of the aromatic polycarbonate resin (A) and the (meth)acrylate copolymer (B), generally 2 parts by mass or less and preferably 1 part by mass or less. When the content of the mold releasing agent (G) is excessively large, the problems, such as a decrease in hydrolysis resistance and mold staining in injection molding, may arise.

As the mold releasing agent (G), when the fully esterified compound formed between an aliphatic monoalcohol and an aliphatic monocarboxylic acid and the fully esterified compound formed between an aliphatic polyalcohol and an aliphatic monocarboxylic acid are used in combination, the usage ratio (mass ratio) therebetween is preferably set so that the fully esterified compound formed between an aliphatic monoalcohol and an aliphatic monocarboxylic acid: the fully esterified compound formed between an aliphatic polyalcohol and an aliphatic monocarboxylic acid is 1: 1 to 10. The reason for this is that when those compounds are used in combination, the effects described above can be reliably obtained.

<Antioxidant (H)>

The aromatic polycarbonate resin composition of the present invention may contain an antioxidant (H) if desired. When the antioxidant (H) is contained, degradation in hue and degradation in mechanical properties during high-temperature residence can be suppressed.

As the antioxidant (H), for example, a hindered phenolic antioxidant may be mentioned. As particular examples thereof, for example, there may be mentioned pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diyl bis[3-(3,5-di-tert-butyl-4-hydroxyphenylpropionamide), 2,4-dimethyl-6-(1-methylpentadecyl)phenol, diethyl[[3,5-bis(1,1-dimethylethyl)-4-hydroxyphenyl]methyl]phosphonate, 3,3',3",5,5',5"-hexa-tert-butyl-a,a',a"-(mesitylene-2,4,6-triyl)tri-p-cresol, 4,6-bis(octyl thiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, and 2,6-di-tert-butyl-4-(4,6-bis(octylthio)-1,3,5-triazine-2-ylamino)phenol.

Among those mentioned above, pentaerythritol tetrakis[3-(3,5-di-tert-butyl-4-hydroxyphenyl)propionate] and octadecyl-3-(3,5-di-tert-butyl-4-hydroxyphenyl)propionate are preferable. As commercially available phenolic antioxidants as mentioned above, for example, "Irganox 1010" and "Irganox 1076" manufactured by Ciba and "ADK STAB AO-50" and "ADK STAB AO-60" manufactured by Adeka Corp. may be mentioned.

In addition, the antioxidants (H) may be contained alone, or at least two types thereof may be arbitrarily contained in combination at an arbitrary ratio.

When the aromatic polycarbonate resin composition of the present invention contains the antioxidant (H), the content thereof is, with respect to 100 parts by mass of the total of the aromatic polycarbonate resin (A) and the (meth)acrylate copolymer (B), generally 0.0001 parts by mass or more, preferably 0.001 parts by mass or more, and more preferably 0.01 parts by mass or more and is generally 3 parts by mass or less, preferably 1 part by mass or less, more preferably 0.5 parts by mass or less, and even more preferably 0.3 parts by mass or less. When the content of the antioxidant (H) is less than the lower limit of the above range, the effect as the antioxidant may not be sufficient in some cases, and when the content of the antioxidant (H) is more than the upper limit of the above range, since the effect cannot be further improved, it may not be preferable from an economical point of view in some cases.

<UV Absorber (I)>

The aromatic polycarbonate resin composition of the present invention preferably contains an UV absorber (I) if desired. When the UV absorber (I) is contained, the weatherability of the aromatic polycarbonate resin composition of the present invention can be improved.

As the UV absorber (I), for example, there may be mentioned an inorganic UV absorber, such as cerium oxide or zinc oxide; and an organic UV absorber, such as a benzotriazole compound, a benzophenone compound, a salicylate compound, a cyanoacrylate compound, a triazine compound, an oxanilide compound, a malonic ester compound, or a hindered amine compound. Among those mentioned above, the organic UV absorber is preferable, and the benzotriazole compound is more preferable. When the organic UV absorber is selected, the transparency and mechanical properties of the aromatic polycarbonate resin composition of the present invention are preferably improved.

As particular examples of the benzotriazole compound, for example, there may be mentioned 2-(2'-hydroxy-5'-methylphenyl)benzotriazole, 2-[2'-hydroxy-3',5'-bis($\alpha$,$\alpha$-dimethylbenzyl)phenyl]benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-di-tert-amyl)benzotriazole, 2-(2'-hydroxy-5'-tert-octylphenyl)benzotriazole, and 2,2'-methylene bis[4-(1,1,3,3-tetramethylbutyl)-6-(2N-benzotriazole-2-yl)phenol]. Among those mentioned above, 2-(2'-hydroxy-5'-tert-octylphenyl)benzotriazole and 2,2'-methylene bis[4-(1,1,3,3-tetramethylbutyl)-6-(2N-benzotriazole-2-yl)phenol] are preferable, and 2-(2'-hydroxy-5'-tert-octylphenyl)benzotriazole is particularly preferable. As the benzotriazole compound as mentioned above, for example, in particular, "SEESORB 701", "SEESORB 705", "SEESORB 703", "SEESORB 702", "SEESORB 704", and "SEESORB 709", each of which is manufactured by Shipro Kasei Kaisha; "VIOSORB 520", "VIOSORB 582", "VIOSORB 580", and "VIOSORB 583", each of which is manufactured by Kyodo Chemical Co., Ltd.; "Chemisorb 71" and "Chemisorb 72, each of which is manufactured by Chemipro Kasei Co., Ltd.; "Cyasorb UV5411" manufactured by Cytec Industries Inc.; "LA-32", "LA-38", "LA-36", "LA-34", and "LA-31", each of which is manufactured by Adeka Corp.; and "Tinuvin P", "Tinuvin 234", "Tinuvin 326", "Tinuvin 327", and "Tinuvin 328", each of which is manufactured by Ciba Specialty Chemicals Inc., may be mentioned.

As particular examples of the benzophenone compound, for example, there may be mentioned 2,4-dihydroxy benzophenone, 2-hydroxy-4-methoxybenzophenone, 2-hydroxy-4-methoxybenzophenone-5-sulfonic acid, 2-hydroxy-4-n-octoxybenzophenone, 2-hydroxy-n-dodecyloxybenzophenone, bis(5-benzoyl-4-hydroxy-2-methoxypheny)methane, 2,2'-dihydroxy-4-methoxybenzophenone, and 2,2'-dihydroxy-4,4'-dimethoxybenzophenone, and as the benzophenone compound as mentioned above, in particular, "SEESORB 100", "SEESORB 101", "SEESORB 101S", "SEESORB 102", and "SEESORB 103", each of which is manufactured by Shipro Kasei Kaisha; "VIOSORB 100", "VIOSORB 110", and "VIOSORB 130", each of which is manufactured by Kyodo Chemical Co., Ltd.; "Chemisorb 10", "Chemisorb 11", "Chemisorb 11S", "Chemisorb 12", "Chemisorb 13" and "Chemisorb 111, each of which is manufactured by Chemipro Kasei Co., Ltd.; "Uvinul 400" manufactured by BASF, "Uvinul M-40" manufactured by BASF, and "Uvinul MS-40" manufactured by BASF; "Cyasorb UV9", "Cyasorb UV284", "Cyasorb UV531", and "Cyasorb UV24", each of which is manufactured by Cytec Industries Inc.; and "ADK STAB 1413" and "ADK STAB LA-51", each of which is manufactured by Adeka Corp., may be mentioned.

As particular examples of the salicylate compound, for example, phenyl salicylate and 4-tert-butylphenyl salicylate may be mentioned, and as the salicylate compound as mentioned above, in particular, for example, "SEESORB 201" and "SEESORB 202", each of which is manufactured by Shipro Kasei Kaisha; and "Chemisorb 21" and "Chemisorb 22", each of which is manufactured by Chemipro Kasei Co., Ltd., may be mentioned.

As particular examples of the cyanoacrylate compound, for example, there may be mentioned ethyl-2-cyano-3,3-diphenyl acrylate and 2-ethylhexyl-2-cyano-3,3-diphenyl acrylate, and as the cyanoacrylate compound as mentioned above, in particular, for example, "SEESORB 501" manufactured by Shipro Kasei Kaisha; "VIOSORB 910" manufactured by Kyodo Chemical Co., Ltd.; "Uvisolator 300" manufactured by Daiichi Kasei Co., Ltd.; and "Uvinul N-35" and "Uvinul N-539", each of which is manufactured by BASF, may be mentioned.

As particular examples of the oxanilide compound, for example, 2-ethoxy-2'-ethyl-oxalic acid bisanilide may be mentioned, and as the oxanilide compound as mentioned above, in particular, for example, "Sanduvor VSU" manufactured by Clariant AG. may be mentioned.

As the malonic ester compound, a 2-(alkylidene) malonic acid ester is preferable, and a 2-(1-arylalkylidene) malonic ester is more preferable. As the malonic ester compound as mentioned above, in particular, for example, "PR-25" manufactured by Clariant (Japan) K.K. and "B-CAP" manufactured by Ciba Specialty Chemicals Co., Ltd. may be mentioned.

When the aromatic polycarbonate resin composition of the present invention contains the UB absorber (I), the content thereof is, with respect to 100 parts by mass of the total of the aromatic polycarbonate resin (A) and the (meth)acrylate copolymer (B), generally 0.001 parts by mass or more, preferably 0.01 parts by mass or more, and more preferably 0.1 parts by mass or more and in addition, is generally 3 parts by mass or less, preferably 1 part by mass or less, more preferably 0.5 parts by mass or less, and even more preferably 0.4 parts by mass or less. When the content of the UV absorber (I) is the lower limit of the above range or less, the effect of improving weatherability may be insufficient in some cases, and when the content of the UV absorber (I) is more than the upper limit of the above range, mold deposits and the like are generated, and as a result, mold staining may occur in some cases.

In addition, the UV absorbers (I) may be contained alone, or at least two types thereof may be arbitrarily contained in combination at an arbitrary ratio.

<Dye or Pigment>

The aromatic polycarbonate resin composition of the present invention may contain a dye or a pigment if desired. When a dye or a pigment is contained, the shielding properties and the weatherability of the aromatic polycarbonate resin composition of the present invention can be improved, and in addition, the designability of a molded article obtained by molding the aromatic polycarbonate resin composition of the present invention can also be improved.

As the dye or the pigment, for example, an inorganic pigment, an organic pigment, or an organic dye may be mentioned.

As the inorganic pigment, for example, there may be mentioned carbon black; sulfide pigments, such as cadmium red and cadmium yellow; silicate pigments, such as ultramarine blue; oxide pigments, such as titanium oxide, zinc white, red iron oxide, chromium oxide, iron black, titan yellow, zinc-iron brown, titanium cobalt green, cobalt green, cobalt blue, copper-chromium black, and copper-iron black; chromate pigments, such as chrome yellow and molybdate orange; and ferrocyanide pigments, such as iron blue.

As the organic pigment and the organic dye, for example, there may be mentioned phthalocyanine dyes or pigments, such as copper phthalocyanine blue and copper phthalocyanine green; azo dyes or pigments, such as nickel azo yellow; condensed polycyclic dyes or pigments, such as a thioindigo-based, a perinone-based, a perylene-based, a quinacridone-based, a dioxazine-based, an isoindolinone-based, and a quinophthalone-based compound; and anthraquinone-based, heterocycle-based, and methyl-based dyes or pigments.

Among those mentioned above, in view of heat stability, for example, titanium oxide, carbon black, and a cyanine-based, a quinoline-based, an anthraquinone-based, and a phthalocyanine-based compound are preferable.

In addition, the dyes or the pigments may be contained alone, or at least two types thereof may be arbitrarily contained in combination at an arbitrary ratio.

In addition, in order to improve handling properties during extrusion and dispersibility into the resin composition, the dye or the pigment may be mixed with a polystyrene resin, a polycarbonate resin, or an acrylic resin to form a masterbatch.

When the aromatic polycarbonate resin composition of the present invention contains a dye or a pigment, although the content thereof may be appropriately selected in accordance with a required designability, the content is, with respect to 100 parts by mass of the total of the aromatic polycarbonate resin (A) and the (meth)acrylate copolymer

(B), generally 0.001 parts by mass or more, preferably 0.01 parts by mass or more, and more preferably 0.1 parts by mass or more and in addition, is generally 3 parts by mass or less, preferably 2 parts by mass or less, more preferably 1 part by mass or less, and even more preferably 0.5 parts by mass or less. When the content of the dye or the pigment is the lower limit of the above range or less, the coloration effect may not be sufficiently obtained in some cases, and when the content of the dye or the pigment is more than the upper limit of the above range, mold deposits and the like are generated, and as a result, mold staining may occur in some cases.

<Antistatic Agent>

The aromatic polycarbonate resin composition of the present invention may contain an antistatic agent if desired. Although the antistatic agent is not particularly limited, a phosphonium sulfonate represented by the following formula (5) is preferable.

[Chem. 4]

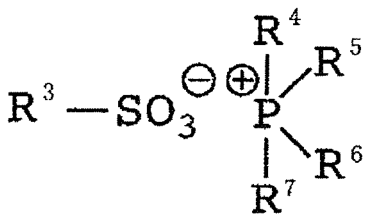

(5)

(In the general formula (5), $R^3$ represents an alkyl or an aryl group which has 1 to 40 carbon atoms and which may have at least one substituent, and $R^4$ to $R^7$ each independently represent a hydrogen atom or an alkyl or an aryl group having 1 to 10 carbon atoms and may be identical to or different from each other.)

Although $R^3$ of the above general formula (5) represents an alkyl or an aryl group having 1 to 40 carbon atoms, in view of transparency, heat resistance, and compatibility with a polycarbonate resin, an aryl group is preferable, and a group derived from an alkylbenzene or an alkylnaphthalene ring substituted with an alkyl group having 1 to 34 carbon atoms, preferably 5 to 20 carbon atoms, and particularly 10 to 15 carbon atoms is preferable. In addition, although $R^4$ to $R^7$ of the general formula (5) each independently represent a hydrogen atom or an alkyl or an aryl group having 1 to 10 carbon atoms, an alkyl group having 2 to 8 carbon atoms is preferable, an alkyl group having 3 to 6 carbon atoms is more preferable, and a butyl group is particularly preferable.

As particular example of the phosphonium sulfonate, for example, there may be mentioned tetrabutyl phosphonium dodecyl sulfonate, tetrabutyl phosphonium dodecylbenzene sulfonate, tributyl octyl phosphonium dodecylbenzene sulfonate, tetraoctyl phosphonium dodecylbenzene sulfonate, tetraethyl phosphonium octadecylbenzene sulfonate, tributyl methyl phosphonium dibutylbenzene sulfonate, triphenyl phosphonium dibutylnaphthyl sulfonate, and trioctyl methyl phosphonium diisopropylnaphthyl sulfonate. Among those mentioned above, since being compatible with a polycarbonate and being easily commercially available, tetrabutyl phosphonium dodecylbenzene sulfonate is preferable.

Those compounds mentioned above may be used alone, or at least two types thereof may be used in combination.

When the aromatic polycarbonate resin composition of the present invention contains an antistatic agent, the content thereof is, with respect to 100 parts by mass of the total of the aromatic polycarbonate resin (A) and the (meth)acrylate copolymer (B), preferably 0.1 to 5.0 parts by mass, more preferably 0.2 to 3.0 parts by mass, further preferably 0.3 to 2.0 parts by mass, and particularly preferably 0.5 to 1.8 parts by mass. When the content of the antistatic agent is less than 0.1 parts by mass, the antistatic effect may not be obtained, and when the content is more than 5.0 parts by mass, the transparency and mechanical strength are degraded, and a silver streak and/or peeling may be generated on the surface of a molded article, so that appearance defects are liable to occur.

<Flame Retardant, Anti-Dripping Agent>

The aromatic polycarbonate resin composition of the present invention may contain a flame retardant and an anti-dripping agent.

As the flame retardant, for example, there may be mentioned a halogenated flame retardant, such as a polycarbonate of a halogenated bisphenol A, a brominated bisphenol-based epoxy resin, a brominated bisphenol-based phenoxy resin, or a brominated polystyrene resin; a phosphate ester flame retardant; an organic metal salt flame retardant, such as dipotassium diphenyl sulfone-3,3'-disulfonate, potassium diphenyl sulfone-3-sulfonate, or potassium perfluorobutane sulfonate; and a polyorganosiloxane flame retardant, and in particular, a phosphate ester flame retardant is

preferable.

As particular examples of the phosphate ester flame retardant, for example, there may be mentioned triphenyl phosphate, resorcinol bis(dixylenyl phosphate), hydroquinone bis(dixylenyl phosphate), 4,4'-biphenol bis(dixylenyl phosphate), bisphenol A bis(dixylenyl phosphate), resorcinol bis(diphenyl phosphate), hydroquinone bis(diphenyl phosphate), 4,4'-biphenol bis(diphenyl phosphate), and bisphenol A bis(diphenyl phosphate). Those flame retardants may be used alone, or at least two types thereof may be used in combination. Among those mentioned above, resorcinol bis(dixylenyl phosphate) and bisphenol A bis(diphenyl phosphate) are preferable.

When the aromatic polycarbonate resin composition of the present invention contains a phosphate ester flame retardant, the content thereof is, with respect to 100 parts by mass of the total of the aromatic polycarbonate resin (A) and the (meth)acrylate copolymer (B), is preferably 1 to 30 parts by mass, more preferably 3 to 25 parts by mass, and particularly preferably 5 to 20 parts by mass. When the content of the phosphate ester flame retardant is less than the lower limit of the above range, the flame retardant properties may not be sufficient in some cases, and on the other hand, when the content is more than the upper limit, the heat resistance may not be sufficient in some cases.

In addition, as the anti-dripping agent, for example, a fluorinated polyolefin, such as a polyfluoroethylene, may be mentioned, and a polytetrafluoroethylene having a fibril forming ability is preferably mentioned. This anti-dripping agent is easily dispersed in a polymer and tends to bind between polymers to form a fibrous material. A polytetrafluoroethylene having a fibril forming ability is classified into Type 3 of ASTM Standard. A polytetrafluoroethylene in the form of solid not only can be used but that in the form of aqueous dispersion may also be used. As the polytetrafluoroethylene having a fibril forming ability, for example, Teflon (registered trademark) 6J or Teflon (registered trademark) 30J by Du Pont-Mitsui Fluorochemicals Co., Ltd. or Polyflon (trade name) by Daikin Industries, Ltd. is commercially available.

When the aromatic polycarbonate resin composition of the present invention contains an anti-dripping agent, the content thereof is, with respect to 100 parts by mass of the total of the aromatic polycarbonate resin (A) and the (meth)acrylate copolymer (B), preferably 0.02 to 4 parts by mass and more preferably 0.03 to 3 parts by mass. When the blend amount of the anti-dripping agent is more than the upper limit, the appearance of a molded article may be degraded in some cases.

<Other Components>

The aromatic polycarbonate resin composition of the present invention may further contain other components other than those described above, if necessary, as long as desired various properties are not remarkably impaired. As the other components, for example, an anti-fog agent, an antiblocking agent, a flow modifier, a sliding modifier, a plasticizer, a dispersant, and an antibacterial agent may be mentioned. Those resin additives may be contained alone, or at least two types thereof may be arbitrarily contained in combination at an arbitrary ratio.

[Method for Manufacturing Aromatic Polycarbonate Resin Composition]

A method for manufacturing an aromatic polycarbonate resin composition of the present invention is not restricted, and known methods for manufacturing an aromatic polycarbonate resin composition may be widely used.

As one particular example, a method may be mentioned in which after the aromatic polycarbonate resin (A), the (meth)acrylate copolymer (B), and the impact strength improver (C) of the present invention are mixed in advance with other components which are to be blended if necessary, for example, using various types of mixing apparatuses, such as a tumbler, a Henschel mixer, and a super mixer, melt kneading is performed by a mixing apparatus, such as a banbary mixer, a roller mixer, a brabender, a mono-axial kneading extruder, a bi-axial kneading extruder, or a kneader.

In addition, for example, when the components are charged into an extruder using a feeder without mixing them in advance or after mixing only some of the components together in advance and are then melt kneaded, the aromatic polycarbonate resin composition of the present invention may also be manufactured.

In addition, for example, after some components are mixed together in advance, are supplied to an extruder, and are then melt-kneaded to form a resin composition to be used as a masterbatch, when this masterbatch is again mixed with the remaining components and melt-kneaded, the aromatic polycarbonate resin composition of the present invention may also be manufactured.

In addition, for example, when a component which is not likely to be dispersed is to be mixed, this component which is not likely to be dispersed is dissolved or dispersed in a solvent, such as water or an organic solvent, in advance, and kneading is then performed with the solution or the dispersion thus obtained, so that the dispersibility can be improved.

In particular, when the (D) component (E-glass reinforcing material (D)) is used, a method in which after the (D) component and the (E) component are mixed together in advance so that the (E) component is adhered onto the surface of the (D) component, the (A) component, the (B) component, and the additive components to be blended if necessary are mixed together is a more preferable method since the surface activity of the (D) component is effectively suppressed, and an unnecessary sub-reaction is prevented in the resin composition. In addition, a method in which after

a solution containing the (E) component, such as an organic silane compound, dissolved in a solvent and the (D) component are mixed together, and the solvent is evaporated so that the surface of the (D) component is covered with the (E) component, the (A) component, the (B) component, the (C) component, and the additive components to be blended if necessary are mixed with the above components is particularly preferable.

In the case described above, as the solvent in which the (E) component is dissolved, water or at least one organic solvent, such as an alcohol or acetone, may be used. In addition, in order to facilitate a bonding reaction of the (E) component to the surface of the (D) component, at least one acid component, such as lactic acid, acetic acid, or phosphorus acid, may be added to this solution to have a concentration of approximately 0.05 to 1 percent by mass, and when the acid component is added, a weak acid is preferably used. The concentration of the (E) component in the (E) component solution is in a range of 0.01 to 20 percent by mass and is appropriately adjusted in accordance with the amount to be adhered to the (D) component. When the solvent described above is evaporated, heating may be performed to 40°C to 100°C, and in this step, heating may also be performed in a reduced-pressure atmosphere.

After the individual components are mixed together by the method described above, as a melt kneading method, for example, methods using a banbary mixer, a roller mixer, a brabender, a mono-axial kneading extruder, a bi-axial kneading extruder, a kneader, and the like may be mentioned.

[Molded Article of Aromatic Polycarbonate Resin Composition]

The aromatic polycarbonate resin composition of the present invention is generally formed into an arbitrary shape to be used as an aromatic polycarbonate resin-composition molded article. The shape, pattern, color, dimension of this molded article may be arbitrarily determined in accordance with the application thereof.

A method for manufacturing an aromatic polycarbonate-composition molded article of the present invention is not particularly limited, and a molding method generally used for an aromatic polycarbonate resin composition may be arbitrarily used. As examples of the molding method, for example, there may be mentioned an injection molding method, an ultra high-speed injection molding method, an injection compression molding method, a two-color molding method, a hollow molding method, such as a gas-assist method, a molding method using a heat-insulating mold, a molding method using a rapid heating mold, foam molding (including a supercritical fluid), insert molding, an in-mold coating molding (IMC) method, an extrusion molding method, a sheet molding method, a thermal molding method, a rotational molding method, a lamination molding method, and a press molding method. In addition, a molding method using a hot runner system may also be used.

In particular, in the case in which the aromatic polycarbonate resin composition of the present invention contains the E-glass reinforcing material (D), when the molded article of the present invention is formed using this aromatic polycarbonate resin composition, molding is preferably performed using a mold (hereinafter referred to as "heat-insulating mold") in which a molding surface of a cavity is formed of a material having a heat conductivity of 0.3 to 6.3 W/m·K. When the heat-insulating mold as described above is used, since the E-glass reinforcing material (D) is prevented from floating to the surface of the molded article caused by rapid cooling of the resin composition in a mold cavity during molding, a transparent resin layer is formed as a surface layer of the molded article, and the transfer performance of the mold surface is improved, so that the transparency is not only improved but also the appearance of the molded article can be further improved.

As the heat-insulating mold as described above, there may be mentioned a mold in which a molding surface inside a cavity at least corresponding to the maximum surface among outline forming surfaces of the exterior of a resin molded article is formed of a material having a heat conductivity of 0.3 to 6.3 W/m·K, and for example, a mold may be used in which the inner surface of the cavity is covered with a coating material selected, for example, from various types of materials having the heat conductivity described above, such as various types of ceramics selected from the group consisting of a zirconia material, an alumina material, and $K_2O$-$TiO_2$, and various types of glass selected from the group consisting of soda glass, quartz glass, heat resistant glass, and crystallized glass. As particular examples of the ceramic described above, for example, there may be mentioned $ZrO_2$, $ZrO_2$-CaO, $ZrO_2$-$Y_20_3$, $ZrO_2$-MgO, $ZrO_2$-$SiO_2$, $K_20$-$TiO_2$, $Al_20_3$, $Al_20_3$-TiC, $Ti_3N_2$, $3Al_20_3$-$2SiO_2$, MgO-$SiO_2$, 2MgO-$SiO_2$, and MgO-$Al_20_3$-$SiO_2$, and as the coating material, any material selected from the group consisting of $ZrO_2$, $ZrO_2$-$Y_2O_3$, quartz glass, and crystallized glass is preferable.

The structure of the coating material may be any one of a coating structure, a spray structure, an adhesion structure (that is, a nested type), and the like in accordance with the type of material.

Although depending on the heat conductivity and the structure described above, the thickness of the coating material is generally 0.1 to 10 mm and preferably 0.5 to 5 mm. In addition, the surface roughness of the coating material is generally 0.01 to 15 $\mu$m in terms of Rz.

Furthermore, in order to improve the scratch resistance of the surface layer of the mold and to increase the surface hardness thereof, a metal layer may be provided. In this case, this metal layer is formed of at least one material selected from the group consisting of a Cr material, such as Cr or a Cr alloy, a Cu material, such as Cu or a Cu alloy, and a Ni material, such as Ni or a Ni alloy, and may be formed of one layer or a plurality of layers. As the Cr alloy, in

particular, a nickel-chromium alloy may be mentioned. In addition, as the Cu alloy, in particular, a copper-zinc alloy, a copper-cadmium alloy, and a copper-tin alloy may be mentioned. Furthermore, as the Ni alloy, in particular, a nickel-phosphorus alloy (Ni-P alloy), a nickel-iron alloy, a nickel-cobalt alloy, a nickel-tin alloy, a nickel-iron-phosphorus alloy (Ni-Fe-P alloy), and a nickel-cobalt-phosphorus alloy (Ni-Co-P alloy) may be mentioned. When being required to have a high scratch resistance, for example, the metal layer is preferably formed of a chromium (Cr) material. On the other hand, although the scratch resistance is not so much required for the metal layer, when the thickness is required therefor, for example, the metal layer is preferably formed of a copper (Cu) material. Furthermore, when the metal layer is required to have a scratch resistance to some extent and is also required to have a certain thickness, for example, the metal layer is preferably formed of a nickel (Ni) material. Furthermore, when the metal layer is required to have a certain thickness and is also required to have a surface hardness, the metal layer is preferably formed to have a two-layer structure in such a way that, for example, a lower layer is formed of a copper (Cu) material or a nickel (Ni) material to have a desired thickness by adjusting the thickness and an upper layer is formed of a chromium (Cr) material to have a small thickness.

As examples of the application of the molded article of the present invention manufactured as described above, for example, there may be mentioned components of electrical/electronic devices, OA devices, information terminal devices, mechanical parts, household electrical appliances, vehicle parts, building members, various types of containers, leisure goods/general merchandizes, and lighting devices. Among those mentioned above, since having excellent transparency and mechanical properties, such as surface hardness and impact resistance, the molded article of the present invention may be preferably applied, in particular, to the components of electrical/electronic devices, OA devices, information terminal devices, household electrical appliances, and lighting devices, and particularly preferably applied to the components of electrical/electronic devices and lighting devices, and sheet members therefor.

As the above electrical/electronic devices, for example, there may be mentioned display devices, such as a personal computer, a game machine, a television, a car navigation, and electronic paper, a printer, a copy machine, a scanner, a facsimile machine, an electronic notebook and PDA, an electronic table calculator, an electronic dictionary, a camera, a video camera, a cellular phone, a battery pack, a drive and a reader of a recording medium, a mouse, a ten key, a CD player, an MD player, and a portable radio/audio player. Among those mentioned above, the molded article of the present invention may be preferably applied, for example, to designable components of cabinets of a television, a personal computer, a car navigator, electronic paper, and the like.

As the components of the lighting devices, the molded article of the present invention may be preferably applied, for example, to covers of LED lighting, EL lighting, and the like.

Examples

Hereinafter, with reference to examples, the present invention will be described in more detail. However, the present invention is not limited to the following examples and may be arbitrarily changed and carried out without departing from the scope of the present invention. In addition, in the following description, "part(s)" indicates "part(s) by mass"" on the basis of mass unless otherwise particularly stated.

Measurement/evaluation methods and materials used in the following examples and comparative examples are as follows.

[Measurement/Evaluation Methods]

<Measurement/Calculation of Mass Average Molecular Weight (Mw) >

First, by a gel permeation chromatography (GPC) using a polystyrene (PS) as a standard polymer, measurement of the average molecular weight was performed under the following conditions.

Apparatus: Alliance manufactured by Waters Corp.
Column: "Shodex K-805L" (2 columns) manufactured by Showa Denko K.K.
Detector: UV detector 254 nm
Eluent: chloroform

Next, after the GPC measurement was performed, the relationship between the molecular weight of a polycarbonate (PC) and the elution time was obtained as a calibration curve by a universal calibration method. The elution curve (chromatogram) of PC was measured under the same conditions as those in the case of the calibration curve, and from the elution time (molecular weight) and the peak area (number of molecules) at the elution time, the mass average molecular weight was obtained.

When the number of molecules having a molecular weight Mi is represented by Ni, the mass average molecular

weight (Mw) is represented by the following formula.

$$Mw = \Sigma(NiMi^2) / \Sigma(NiMi)$$

The following calculation formula was used as the conversion formula. In the calculation formula, MPC represents the molecular weight of PC, and MPS represents the molecular weight of PS. The calculation formula was obtained from Mark-Houwink formula representing the relationship between the following limiting viscosity [η] and the molecular weight M. However, as for the values of K and α, K: $1.11\times10^{-4}$ and α: 0.725 were used in the case of PS, and K: $3.89\times10^{-4}$ and α: 0.700 were used in the case of PC.

$MPC = 0.47822MPS^{1.01470}$
$MPS = 2.0689MPC^{0.98551}$
$[\eta] = KM^{\alpha}$

In addition, the elution curve (chromatogram) of a polycarbonate was measured under the same conditions as those in the case of the calibration curve, and from the elution time (molecular weight) and the peak area (number of molecules) at the elution time, the mass average molecular weight was obtained.

For a (meth)acrylate copolymer, THF was used as an eluent, "TSKgel SuperHzM-M (four columns)" manufactured by Tosoh Corporation was used as the column, and calculation was performed from the calibration curve of PS.

<Evaluation of Refractive Index>

Measurement of the refractive index of the resin component prepared by mixing the (A) component and the (B) component and measurement of the refractive index of the impact strength improver which was the (C) component were performed using a Model 2010 prism coupler measurement apparatus manufactured by Metricon Corp.

As a test piece of the resin component, a resin component formed of the aromatic polycarbonate resin (A) and the (meth)acrylate copolymer (B) was only used, and a test piece having a thickness of 2 mm was used which was formed by a method in accordance with <Case Of Aromatic Polycarbonate Resin Composition Containing No E-Glass Reinforcing Material (D)> of <Formation of Plate Test Piece Having Thickness of 2 mm>, which will be described later. In addition, as a test piece of the impact strength improver (C), films each having a thickness of 1.2 mm obtained by melt press molding using various types of rubber materials for the impact strength improver (C) were used. The states of all the test pieces thus prepared were conditioned before measurement at 23°C and 50% RH for 48 hours or more. The refractive indexes were measured at three points (473 nm, 633 nm, and 826 nm) under refractive index measurement conditions of a bulk/substrate mode, and from the formula Cothy, a refractive index (nd) at a wavelength 589 nm was calculated. The results are shown in Tables 1 to 5. In addition, in the tables, the refractive index of the resin component and that of the impact strength improver (C) at a wavelength of 589 nm are represented by nab and nc, respectively.

<Evaluation of Fluidity>

After pellets of the resin composition were dried at 100°C for 4 hours or more, a flow rate Q value (unit: $\times10^{-2}$ cc/sec) per unit time of the composition was measure at 280°C and a load of 160 kgf using a koka-type flow tester, so that the fluidity was evaluated. In this measurement, an orifice having a diameter of 1 mm and a length of 10 mm was used. The results are shown in Tables 2 to 4. In addition, in the tables, the result is represented by "Fluidity".

<Evaluation of Transparency>

In accordance with JIS K-7105, a haze value (unit: %) of a plate test piece having a thickness of 2 mm was measured by an NDH-2000 type haze meter manufactured by Nippon Denshoku Industries Co., Ltd. The haze is a value used as the index indicating the degree of turbidness of a resin, and a smaller value is more preferable since indicating a higher transparency. The results are shown in Tables 2 to 5. In addition, in the tables, the result is represented by "Haze".

<Evaluation of Impact Strength>

<Charpy Impact Strength>

Evaluation of Charpy impact strength was performed by an unnotched Charpy impact test (edgewise impact

test in accordance with ISO-179). The measurement was performed using a Charpy impact test piece having a width of 10 mm and a thickness of 3 mm and a 15J spindle. A test piece which was not broken but only deformed was represented by NB. The results are shown in Tables 2 to 4. In addition, in the tables, the results are represented by "Charpy Impact Strength".

<Surface Impact Strength>

As evaluation of surface impact strength of a resin composition reinforced by glass fibers, a puncture surface impact test was performed in accordance with JIS K7211. AS the test piece, a test piece having a length of 100 mm, a width of 100 mm, and a thickness of 2 mm was used. The results are shown in Table 5. In addition, in the table, the result is represented by "Surface Impact strength".

<Evaluation of Surface Hardness>

For evaluation of hardness, a scratch test was performed 5 times on a plate test piece having a thickness of 2 mm in accordance with JIS K5400. The results are shown in Tables 2 to 5. In addition, in the Table, the result is represented by "Pencil Hardness".

[Used Materials]

<Aromatic Polycarbonate Resin (A)>

(A-1) Product name "Iupilon (registered trademark) E-2000", manufactured by Mitsubishi Engineering-Plastics Corp., mass average molecular weight: 35,500, Pencil hardness: 3B
(A-2) Product name "Iupilon (registered trademark) S-3000", manufactured by Mitsubishi Engineering-Plastics Corp., mass average molecular weight: 26,800, Pencil hardness: 3B

<(Meth)Acrylate Copolymer (B)>

After 200 parts of deionized water, 0.3 parts of a dispersant described below, 0.5 parts of sodium sulfate, 0.3 parts of 2,2'-azobisisobutyronitrile, 15 parts of phenyl methacrylate, 84 parts of methyl methacrylate, 1 part of methyl acrylate, and 1.8 parts of n-octyl mercaptan were charged into a heatable reaction container equipped with a thermometer, a nitrogen inlet tube, a reflux cooling tube, and a stirring device, the inside of the reaction container was replaced with nitrogen, and the temperature was then increased to 80°C. After stirring was performed for 4 hours, a polymer in the form of beads thus obtained was washed with water and then dried, so that the (meth)acrylate copolymer (B) was obtained. The pencil hardness of this (meth)acrylate copolymer (B) was 2H, and the mass average molecular weight thereof was 15,000.

Dispersant: A polymer obtained by copolymerization between 70 parts of potassium methacrylate and 30 parts of methyl methacrylate and a polymer obtained by copolymerization among 65 parts of sodium 2-sulfoethyl methacrylate, 10 parts of potassium methacrylate, and 25 parts of methyl methacrylate were mixed at a mass ratio of 1: 1, and an aqueous solution containing this mixed polymer at a concentration of 10% was used as the dispersant.

<Impact Strength Improver (C)>

(C-1), (C-2), (C-3): core/shell type graft copolymer formed of a poly(butadiene-styrene/styrene) copolymer
(C-4), (C-5): core/shell type graft copolymer (MBS) formed of a poly(butadiene-styrene/styrene-acryl) copolymer
The above (C-1) to (C-5) were core-shell rubbers which had an average grain diameter of 0.17 μm and different refractive indexes nc and which were manufactured by using styrene, butadiene, and methyl methacrylate as monomers at different composition ratios. The composition ratio between monomer components of each core-shell rubber and the refractive index nc thereof are shown in Table 1.

[Table 1]

| | Refractive Index nc | Composition Ratio of Each Component (Mass%)※ | | |
|---|---|---|---|---|
| | | M | B | S |
| C-1 | 1.566 | 0 | 33 | 67 |
| C-2 | 1.564 | 0 | 35 | 65 |
| C-3 | 1.562 | 0 | 38 | 62 |
| C-4 | 1.560 | 2 | 38 | 60 |
| C-5 | 1.558 | 4 | 36 | 60 |
| C-6 | 1.564 | 5 | 32 | 63 |
| ※ M: methyl methacrylate, B: butadiene, S: styrene | | | | |

(C-6) Acryl-butadiene-styrene core-shell rubber (MBS): product name "M-300", manufactured by Kaneka Corp. (compound having an acrylic structure formed of ethylene glycol methacrylate, refractive index nc: 1.564, content of styrene structure: 63 percent by mass)
(C-7) Styrene-ethylene-butadiene-styrene rubber (SEBS): product name "L605", manufactured by Asahi Kasei Corp. (refractive index nc: 1.559, content of styrene structure: 60 to 80 percent by mass)
(C-8) Acryl-butadiene-styrene core-shell rubber: product name "EXL2603", manufactured by Rohm and Haas. (refractive index nc: 1.512, butadiene component: 80 percent by mass or more)
(C-9) Styrene-butadiene rubber (SBS): product name "KR-05E", manufactured by Chevron Phillips Chemical Company. (refractive index nc: 1.574)
(C-10) Acryl-butadiene-styrene core-shell rubber: product name "C-930", manufactured by Mitsubishi Rayon Co., Ltd. (refractive index nc: 1.543)
(C-11) Acryl-butadiene-styrene core-shell rubber: product name "TH-21", manufactured by Denki Kagaku Kogyo K.K. (refractive index nc: 1.547)

<E-Glass Reinforcing Material (D)>

E glass chopped strands: product name "T-571", manufactured by Nippon Electric Glass Co., Ltd. (refractive index: 1.56, average fiber diameter: 13 μm, average fiber length: 3 mm, aminosilane treated and bundled by heat-resistant urethane)

<Phosphorus Heat Stabilizer (F)>

Tris(2,4-di-tert-butylphenyl)phosphite: product name " "Adeka Stab 2112", manufactured by Adeka Corp.

<Mold Releasing Agent (G)>

(G-1) stearyl stearate: product name "Unistar M9676", manufactured by NOF Corp.
(G-2) pentaerythritol tetrastearate: product name "Loxyol VPG861", manufactured by Cognis Japan.

<Antioxidant (H)>

Pentaerythritol-tetrakis[3-(3,5-di-tert-butyl-4-hydroxyphenyl)propionate]: product name "Irganox 1010", manufactured by Ciba.

<UV absorber (I)>

2-(2'-hydroxy-5'-tert-octylphenyl)-2H-benzotriazole: product name "SEESORB 709", manufactured by Shipro Kasei Kaisha.

<Acrylic Resin (J)>

Poly(methyl methacrylate): product name "Acrypet VH-001", manufactured by Mitsubishi Rayon Co., Ltd. (pencil hardness: 2H, mass average molecular weight: 60,000)

<Styrene Resin (K)>

Polystyrene: product name "HF77", manufactured by PS Japan Corp. (pencil hardness: B)

In addition, the pencil hardnesses of the materials used as the aromatic polycarbonate resin (A), the (meth)acrylate copolymer (B), the acrylic resin (J), and the styrene resin (K) were values measured in a manner similar to that of the above <Evaluation of Surface Hardness>.

[Examples 1 to 20 and Comparative Examples 1 to 12]

{Manufacturing of Resin Pellets}

After the above individual components were blended at mass ratios shown in Tables 2 to 6 and were then mixed together by a tumbler for 20 minutes, the mixture thus prepared was charged into a Japan Steel Works-made apparatus (TEX30HSST) provided with one vent port, was kneaded at a screw rotation number of 200 rpm, an ejection amount of 20 kg/hour, and a barrel temperature of 280°C, and was then extruded to form molten resin in the form of strands. Subsequently, the molten resin strands were rapidly cooled in a water bath and were pelletized using a pelletizer, so that pellets of an aromatic polycarbonate resin composition were obtained.

{Formation of Test Piece}

<Formation of Plate Test Piece Having Thickness of 2 mm>

<Case of Aromatic Polycarbonate Resin Composition Containing No E-Glass Reinforcing Material (D)>

After the pellets obtained by the manufacturing method described above were dried at 100°C for 5 hours, injection molding thereof was performed using a steel-made mold by an injection machine ("M150ALL-SJ" manufactured by Meiki Co., Ltd.) at a cylinder temperature of 270°C, a mold temperature of 80°C, and a molding cycle of 50 seconds, so that a plate test piece having a size of 100 mm by 100 mm and a thickness of 2 mm was formed.

<Case of Aromatic Polycarbonate Resin Composition Containing E-Glass Reinforcing Material (D)>

Except that instead of using the steel-made mold, a heat-insulating mold in which a Ni-P layer having a thickness of 100 μm was formed on a zirconia ceramic (heat conductivity: 3.8 W/m·K) by a nonelectrolytic plating method was used, a plate test piece having a size of 100 mm by 100 mm and a thickness of 2 mm was formed at a mold temperature of 120°C in a manner similar to that described above.

<Formation of Charpy Impact Test Piece>

After the pellets obtained by the manufacturing method described above were dried at 100°C for 5 hours, injection molding thereof was performed with a steel-made mold by an injection machine ("SG75Mk-II" manufactured by Sumitomo Heavy Industries, Ltd.) at a cylinder temperature of 280°C, a mold temperature of 80°C, and a molding cycle of 50 seconds, so that a Charpy impact test piece having a thickness of 3 mm was formed.

[Evaluation Results]

[Table 2]

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Resin Composition Blend (Parts) | Aromatic Polycarbonate Resin (A) | A-1 | 68.4 | 68.4 | 63.2 | 57.9 | 73.7 | 68.4 | 63.2 | 57.9 | 73.7 | 68.4 |
| | (Meth)Acrylate Copolymer(B) | | 31.6 | 31.6 | 36.8 | 42.1 | 26.3 | 31.6 | 36.8 | 42.1 | 26.3 | 31.6 |
| | Impact Strength Improver(C) | C-1 | 5.3 | - | - | - | - | - | - | - | - | - |
| | | C-2 | | 5.3 | 5.3 | 5.3 | - | - | - | - | - | - |
| | | C-3 | | - | - | - | 5.3 | 5.3 | 5.3 | 5.3 | - | - |
| | | C-4 | | - | - | - | - | - | - | - | 5.3 | 5.3 |
| | | C-5 | | - | - | - | - | - | - | - | - | - |
| | | C-6 | | - | - | - | - | - | - | - | - | - |
| | | C-7 | | - | - | - | - | - | - | - | - | - |
| | Phosphorus Stabilizer(F) | | 0.04 | 0.04 | 0.04 | 0.04 | 0.04 | 0.04 | 0.04 | 0.04 | 0.04 | 0.04 |
| | Mold Releasing Agent(G) | G-1 | 0.1 | 0.1 | 0.1 | 0.1 | 0.1 | 0.1 | 0.1 | 0.1 | 0.1 | 0.1 |
| | | G-2 | 0.1 | 0.1 | 0.1 | 0.1 | 0.1 | 0.1 | 0.1 | 0.1 | 0.1 | 0.1 |
| | Antioxidant (H) | | 0.1 | 0.1 | 0.1 | 0.1 | 0.1 | 0.1 | 0.1 | 0.1 | 0.1 | 0.1 |
| | UV Absorber(I) | | 0.2 | 0.2 | 0.2 | 0.2 | 0.2 | 0.2 | 0.2 | 0.2 | 0.2 | 0.2 |
| Refractive Index | Impact Strength Improver (C)nc | | 1.566 | 1.564 | 1.564 | 1.564 | 1.562 | 1.562 | 1.562 | 1.562 | 1.560 | 1.560 |
| | Resin Component nab | | 1.562 | 1.562 | 1.559 | 1.556 | 1.566 | 1.562 | 1.559 | 1.556 | 1.564 | 1.562 |
| | nab-nc | | -0.004 | -0.002 | -0.005 | -0.008 | 0.004 | 0 | -0.003 | -0.006 | 0.004 | 0.002 |

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Evaluation Result | HAZE(%) | 5.2 | 4.7 | 6.9 | 26.5 | 22.9 | 9.9 | 3.9 | 7.8 | 11.5 | 12.6 |
| | Charpy Impact Strength ($kJ/m^2$) | NB | NB | NB | NB | NB | NB | NB | NB | NB | NB |
| | Fluidity($\times 10^{-2}$cc/sec) | 18.5 | 19.3 | 26.3 | 39.7 | 13.1 | 18.3 | 26.4 | 38.8 | 21.4 | 18.3 |
| | Pencil Hardness | F | F | F | H | F | F | F | H | F | F |

[Table 3]

| | | | Example 11 | Example12 | Example 13 | Example 14 | Example 15 | Example 16 | Example 17 | Example 18 | Example 19 |
|---|---|---|---|---|---|---|---|---|---|---|---|
| Resin Composition Blend (Parts) | Aromatic Polycarbonate Resin (A) | A-1 | 63.2 | 68.4 | 66.7 | 64.7 | 73.7 | 68.4 | 63.2 | 68.4 | 68.4 |
| | (Meth)Acrylate Copolymer(B) | | 36.8 | 31.6 | 33.4 | 35.3 | 26.3 | 31.6 | 36.8 | 31.6 | 31.6 |
| | Impact Strength Improver (C) | C-1 | - | - | - | - | - | - | - | - | - |
| | | C-2 | - | - | - | - | - | - | - | - | - |
| | | C-3 | - | - | - | - | - | - | - | - | - |
| | | C-4 | 5.3 | 5.3 | 11.1 | 17.6 | - | - | - | - | - |
| | | C-5 | - | - | - | - | 5.3 | 5.3 | 5.3 | - | - |
| | | C-6 | - | - | - | - | - | - | - | 5.3 | - |
| | | C-7 | - | - | - | - | - | - | - | - 5.3 | 5.3 |
| | Phosphorus Stabilizer(F) | | 0.04 | 0.04 | 0.04 | 0.04 | 0.04 | 0.04 | 0.04 | 0.04 | 0.04 |
| | Mold Releasing Agent(G) | G-1 | 0.1 | 0.1 | 0.1 | 0.1 | 0.1 | 0.1 | 0.1 | 0.1 | 0.1 |
| | | G-2 | 0.1 | 0.1 | 0.1 | 0.1 | 0.1 | 0.1 | 0.1 | 0.1 | 0.1 |
| | Antioxidant (H) | | 0.1 | 0.1 | 0.1 | 0.1 | 0.1 | 0.1 | 0.1 | 0.1 | 0.1 |
| | UV Absorber(I) | | 0.2 | 0.2 | 0.2 | 0.2 | 0.2 | 0.2 | 0.2 | 0.2 | 0.2 |
| Refractive Index | Impact Strength Improver (C) nc | | 1.560 | 1.560 | 1.560 | 1.560 | 1.558 | 1.558 | 1.558 | 1.564 | 1.559 |
| | Resin Component nab | | 1.559 | 1.562 | 1.562 | 1.562 | 1.566 | 1.562 | 1.559 | 1.562 | 1.562 |
| | nab-nc | | -0.001 | 0.002 | 0.002 | 0.002 | 0.008 | 0.004 | 0.001 | -0.002 | 0.003 |
| Evaluation Result | HAZE(%) | | 4.6 | 14.3 | 14.3 | 14.5 | 26.3 | 16.3 | 7.4 | 19 | 16 |
| | Charpy Impact Strength ($kJ/m^2$) | | 159 | NB | NB | NB | NB | NB | 147 | NB | 180 |
| | Fluidity( $\times 10^{-2}$cc/sec) | | 26.2 | 20.8 | 22.3 | 24.6 | 12.9 | 18.3 | 26.6 | 33 | 63 |
| | Pencil Hardness | | F | F | F | F | F | F | F | F | F |

[Table 4]

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 12 |
|---|---|---|---|---|---|---|---|---|---|---|---|---|
| Resin Composition Blend (Parts) | Aromatic Polycarbonate Resin (A) | A-1 | 100 | 70 | 70 | 89.5 | 52.6 | 68.4 | 68.4 | 68.4 | 68.4 | 68.4 |
| | (Meth)Acrylate Copolymer(B) | | - | - | 30 | 10.5 | 47.4 | 31.6 | 31.6 | 31.6 | 31.6 | 31.6 |
| | Impact Strength Improver(C) | C-3 | - | - | - | 5.3 | 5.3 | - | - | - | - | - |
| | | C-8 | - | - | - | - | - | 5.3 | - | - | - | - |
| | | C-9 | - | - | - | - | - | - | 5.3 | - | - | - |
| | | Cup | - | - | - | - | - | - | - | 5.3 | - | - |
| | | C-11 | - | - | - | - | - | - | - | - | 5.3 | - |
| | Phosphorus Stabilizer (F) | | 0.04 | 0.04 | 0.04 | 0.04 | 0.04 | 0.04 | 0.04 | 0.04 | 0.04 | 0.04 |
| | Mold Releasing Agent(G) | G-1 | 0.1 | 0.1 | 0.1 | 0.1 | 0.1 | 0.1 | 0.1 | 0.1 | 0.1 | 0.1 |
| | | G-2 | 0.1 | 0.1 | 0.1 | 0.1 | 0.1 | 0.1 | 0.1 | 0.1 | 0.1 | 0.1 |
| | Antioxidant(H) | | 0.1 | 0.1 | 0.1 | 0.1 | 0.1 | 0.1 | 0.1 | 0.1 | 0.1 | 0.1 |
| | UV Absorber(I) | | 0.2 | 0.2 | 0.2 | 0.2 | 0.2 | 0.2 | 0.2 | 0.2 | 0.2 | 0.2 |
| | Acrylic Resin(J) | | - | 30 | - | - | - | - | - | - | - | - |
| | Styrene Resin(K) | | - | - | - | - | - | - | - | - | - | 5.3 |
| Refractive Index | Impact Strength Improver(C)nc | | - | 1.492 | - | 1.562 | 1.562 | 1.512 | 1.574 | 1.543 | 1.547 | - |
| | Resin Component nab | | 1.582 | - | - | 1.559 | 1.555 | 1.562 | 1.562 | 1.562 | 1.562 | - |
| | nab-nc | | - | - | - | -0.003 | -0.007 | 0.050 | -0.012 | 0.019 | 0.015 | - |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 12 |
|---|---|---|---|---|---|---|---|---|---|---|---|
| Evaluation Result | HAZE(%) | 0.4 | 99 | 0.6 | 0.6 | 0.6 | 93 | 19 | 30 | 55 | 25 |
| | Charpy Impact Strength($kJ/m^2$) | NB | NB | 154 | NB | 80 | NB | 136 | 181 | 143 | 120 |
| | Fluidity($\times 10^{-2}$cc/sec) | 16 | - | 14.6 | 4.3 | 44 | 15 | 75 | 21 | 96 | 28 |
| | Pencil Hardness | 3B | F | F | B | H | HB | F | HB | HB | F |

[Table 5]

| | | | Example 20 | Comparative Example 10 | Comparative Example 11 |
|---|---|---|---|---|---|
| Resin Composition Blend (Parts) | Aromatic Polycarbonate Resin (A) | A-2 | 70.60 | 100 | 73.7 |
| | (Meth)Acrylate Copolymer(B) | | 29.4 | - | 26.3 |
| | Impact Strength Improver(C) | C-3 | 5.9 | - | - |
| | Phosphorus Stabilizer(F) | | 0.04 | 0.04 | 0.04 |
| | Mold Releasing Agent (G) | G-1 | 0.1 | 0.1 | 0.1 |
| | | G-2 | 0.1 | 0.1 | 0.1 |
| | Antioxidant(H) | | 0.1 | 0.1 | 0.1 |
| | E-glass reinforcing Material(D) | | 11.7 | 11.2 | 11 |
| Refractive Index | Impact Strength Improver(C) nc | | 1.562 | - | - |
| | Resin Component nab | | 1.566 | 1.587 | 1.566 |
| | nab-nc | | 0.004 | - | - |
| Evaluation Result | HAZE (%) | | 24 | 78.5 | 6.4 |
| | Surface Impact Strength (J) | | 0.62 | 4.7 | 0.17 |
| | Pencil Hardness | | H | B | H |

From the results shown in Tables 2 to 5, the following are found.

The aromatic polycarbonate resin compositions of Examples 1 to 19 are excellent in transparency and impact strength and have a high surface hardness. In particular, compared to Example 18 in which the impact strength improver (C-6) containing a hydroxy group is used, more excellent transparency and heat stability can be obtained in Examples 1 to 17 in which no hydroxy group is contained in the acrylic structure of the impact strength improver (C).

Since the (meth)acrylate copolymer (B) is not contained in Comparative Example 1, the surface hardness thereof is low, and since the molecular weight of the acrylic resin (J) in Comparative Example 2 is high, the transparency thereof is inferior. Since the impact strength improver (C) is not contained in Comparative Example 3, the impact strength thereof is low. Since the blend amount of the (meth)acrylate copolymer (B) is small in Comparative Example 4, a sufficient surface hardness cannot be obtained, and on the other hand, since the blend amount of the (meth)acrylate copolymer (B) is large in Comparative Example 5, the impact strength thereof is inferior. In Comparative Examples 6 to 9, since the difference in refractive index between the impact strength improver (C) and the resin component formed from the aromatic polycarbonate resin (A) and the (meth)acrylate copolymer (B) is large, a molded article which satisfies all of the transparency, impact resistance, and surface hardness cannot be obtained. Since the styrene resin (K) containing no rubber component is added in Comparative Example 12 instead of the impact strength improver (C), the impact strength thereof is inferior.

In the case in which the E-glass reinforcing material (D) is added, the balance between the impact resistance and the transparency is excellent and the surface hardness is also high in Example 20. On the other hand, since the (meth)acrylate copolymer (B) is not contained in Comparative Example 10, the transparency is inferior, and the surface hardness is also low. Since the impact strength improver (C) is not contained in Comparative Example 11, the surface impact strength thereof is low.

As has thus been described, since being excellent in balance between the impact strength, surface hardness, and transparency as compared to a related aromatic polycarbonate resin composition, the aromatic polycarbonate resin composition of the present invention can be used as a preferable material for automobile interior materials, displays of electrical/electronic devices, and the like. Hence, the present invention is significantly excellent in terms of industrial values.

Although the present invention has been described with reference to specific modes, it is apparent to a person skilled in the art that various changes and modifications may be performed without departing from the scope of the present invention.

In addition, this application claims the benefit of Japanese Patent Application No. 2011-159213, filed July 20, 2011.

## Claims

1. An aromatic polycarbonate resin composition comprising:
with respect to 100 parts by mass of a resin component including 55 to 85 percent by mass of an aromatic polycarbonate resin (A) having a mass average molecular weight of 15,000 to 40,000 and 15 to 45 percent by mass of a (meth)acrylate copolymer (B) which has a mass average molecular weight of 5,000 to 30,000 and which is composed of an aromatic (meth)acrylate unit (b1) and a methyl (meth)acrylate unit (b2) at a mass ratio (b1/b2) of 5 to 50/50 to 95, 1 to 20 parts by mass of an impact strength improver (C), wherein the impact strength improver (C) includes at least one selected from the group consisting of an MBS resin, an SBS resin, and an SEBS resin, and wherein when the refractive index of the resin component at a wavelength of 589 nm is represented by nab, and the refractive index of the impact strength improver (C) at a wavelength of 589 nm is represented by nc, nab and nc satisfy the following formula i):

$$\text{Formula i)} \quad -0.01 \leq nab - nc \leq +0.01$$

2. The aromatic polycarbonate resin composition according to Claim 1, wherein the (meth)acrylate copolymer (B) comprises 10 to 30 parts by mass of the aromatic (meth)acrylate unit (b1) and 70 to 90 parts by mass of the methyl (meth)acrylate unit (b2) with respect to 100 parts by mass of (b1) and (b2) in total.

3. The aromatic polycarbonate resin composition according to Claim 1 or 2, wherein the impact strength improver (C) is formed from a monomer having a molecular structure containing no hydroxy group.

4. The aromatic polycarbonate resin composition according to one of Claims 1 to 3, wherein the impact strength improver (C) contains 50 percent by mass or more of a styrene structure.

5. The aromatic polycarbonate resin composition according to Claim 4, wherein the impact strength improver (C) contains 60 to 80 percent by mass of a styrene structure.

6. The aromatic polycarbonate resin composition according to one of Claims 1 to 5, wherein the aromatic polycarbonate resin composition comprises 1 to 100 parts by mass of an E-glass reinforcing material as a (D) component with respect to 100 parts by mass of the resin component.

7. The aromatic polycarbonate resin composition according to one of Claims 1 to 6, wherein the haze of a plate test piece having a thickness of 2 mm formed from the resin composition, which is measured in accordance with JIS K-7105, is 30% or less.

8. An aromatic polycarbonate-resin molded article obtained by molding the aromatic polycarbonate resin composition according to one of Claims 1 to 7.

## Patentansprüche

1. Aromatische Polycarbonatharzzusammensetzung, umfassend:
in Bezug auf 100 Massenteile einer Harzkomponente, die 55 bis 85 Massenprozent eines aromatischen Polycarbonatharzes (A), das ein massengemitteltes Molekulargewicht von 15.000 bis 40.000 aufweist, und 15 bis 45 Massenprozent eines (Meth)acrylat-Copolymers (B) einschließt, das ein massengemitteltes Molekulargewicht von 5.000 bis 30.000 aufweist und aus einer aromatischen (Meth)acrylateinheit (b1) und einer Methyl(meth)acrylateinheit (b2) in einem Massenverhältnis (b1/b2) von 5 bis 50/50 bis 95 besteht, 1 bis 20 Massenteile eines Mittels zur Verbesserung der Stoßfestigkeit (C), worin das Mittel zur Verbesserung der Stoßfestigkeit (C) mindestens eines umfasst, ausgewählt aus der Gruppe bestehend aus einem MBS-Harz, einem SBS-Harz und einem SEBS-Harz, und worin wenn der Brechungsindex der Harzkomponente bei einer Wellenlänge von 589 nm durch nab dargestellt wird und der Brechungsindex des Mittels zur Verbesserung der Stoßfestigkeit (C) bei einer Wellenlänge von 589 nm durch nc

dargestellt wird, nab und nc die folgende Formel i) erfüllen:

$$\text{Formel i)} \quad -0{,}01 \leq nab - nc \leq +0.01$$

2. Aromatische Polycarbonatharzzusammensetzung gemäß Anspruch 1, worin das (Meth)acrylat-Copolymer (B) 10 bis 30 Massenteile der aromatischen (Meth)acrylateinheit (b1) und 70 bis 90 Massenteile der Methyl(meth)acrylateinheit (b2) in Bezug auf 100 Massenteile von (b1) und (b2) insgesamt umfasst.

3. Aromatische Polycarbonatharzzusammensetzung gemäß Anspruch 1 oder 2, worin das Mittel zur Verbesserung der Stoßfestigkeit (C) aus einem Monomer gebildet ist, das eine molekulare Struktur aufweist, die keine Hydroxygruppe enthält.

4. Aromatische Polycarbonatharzzusammensetzung gemäß mindestens einem der Ansprüche 1 bis 3, worin das Mittel zur Verbesserung der Stoßfestigkeit (C) 50 Massenprozent oder mehr einer Styrolstruktur enthält.

5. Aromatische Polycarbonatharzzusammensetzung gemäß Anspruch 4, worin das Mittel zur Verbesserung der Stoßfestigkeit (C) 60 bis 80 Massenprozent einer Styrolstruktur enthält.

6. Aromatische Polycarbonatharzzusammensetzung gemäß mindestens einem der Ansprüche 1 bis 5, worin die aromatische Polycarbonatharzzusammensetzung 1 bis 100 Massenteile eines E-Glas-Verstärkungsmaterials als Komponente (D) in Bezug auf 100 Massenteile der Harzkomponente umfasst.

7. Aromatische Polycarbonatharzzusammensetzung gemäß mindestens einem der Ansprüche 1 bis 6, worin die Trübung eines aus der Harzzusammensetzung gebildeten Plattenteststücks mit einer Dicke von 2 mm, die gemäß JIS K-7105 gemessen wird, 30% oder weniger beträgt.

8. Aromatischer Polycarbonatharz-Formgegenstand, erhalten durch Formen der aromatischen Polycarbonatharzzusammensetzung gemäß mindestens eine der Ansprüche 1 bis 7.

## Revendications

1. Composition de résine polycarbonate aromatique comprenant : par rapport à 100 parties en masse d'un composant de résine comportant de 55 à 85 pourcent en masse d'une résine polycarbonate aromatique (A) ayant une masse moléculaire moyen en masse de 15000 à 40000 et de 15 à 45 pourcent en masse d'un copolymère (méth)acrylate (B) qui a une masse moléculaire moyen en masse de 5000 à 30000 et qui est composé d'une unité (méth)acrylate aromatique (b1) et une unité (méth)acrylate de méthyle (b2) à un rapport en masse (b1/b2) de 5 à 50/50 à 95, de 1 à 20 parties en masse d'un améliorateur de résistance aux chocs (C), lequel améliorateur de résistance aux chocs (C) comporte au moins l'une choisie parmi le groupe constitué d'une résine MBS, une résine SBS, et une résine SEBS, et dans laquelle lorsque l'indice de réfraction du composant de résine à une longueur d'onde de 589 nm est représenté par nab, et l'indice de réfraction de l'améliorateur de résistance aux chocs à une longueur d'onde de 589 nm est représenté par nc, nab et nc satisfaisant la formule i) suivante :

$$\text{Formule i)} \quad -0{,}01 \leq nab - nc \leq +0{,}01$$

2. La composition de résine polycarbonate aromatique selon la Revendication 1, dans laquelle le copolymère (méth)acrylate (B) comprend de 10 à 30 parties en masse de l'unité (méth)acrylate aromatique (b1) et de 70 à 90 parties en masse de l'unité (méth)acrylate de méthyle (b2) par rapport à 100 parties en masse de (b1) et (b2) en total.

3. La composition de résine polycarbonate aromatique selon la Revendication 1 ou 2, dans laquelle l'améliorateur de résistance aux chocs (C) est formé d'un monomère ayant une structure moléculaire ne contenant pas de groupe hydroxy.

4. La composition de résine polycarbonate aromatique selon l'une quelconque des Revendications 1 à 3, dans laquelle l'améliorateur de résistance aux chocs (C) contient 50 pourcent en masse ou plus d'une structure de styrène.

**5.** La composition de résine polycarbonate aromatique selon la Revendication 4, dans laquelle l'améliorateur de résistance aux chocs (C) contient de 60 à 80 pourcent en masse d'une structure de styrène.

**6.** La composition de résine polycarbonate aromatique selon l'une quelconque des Revendications 1 à 5, dans laquelle la composition de résine polycarbonate aromatique comprend de 1 à 100 parties en masse d'un matériau de renforcement de verre E en tant que composant (D) par rapport à 100 parties en masse du composant de résine.

**7.** La composition de résine polycarbonate aromatique selon l'une quelconque des Revendications 1 à 6, dans laquelle la turbidité d'une plaque d'essai ayant une épaisseur de 2 mm formée de la composition de résine, qui est mesurée en accordance avec JIS K-7105, est de 30% ou moins.

**8.** Article moulé en composition de résine polycarbonate aromatique obtenu en moulant la composition de résine polycarbonate aromatique selon l'une quelconque des Revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008255240 A
- JP 2010162559 A
- WO 2009128601 A1
- JP 2011132334 A
- JP 63026140 A
- JP 63031513 A
- JP 2011159213 A